# EUROPÄISCHE PATENTSCHRIFT

(11) **EP 3 116 806 B1**
(45) Veröffentlichungstag und Bekanntmachung des Hinweises auf die Patenterteilung: **09.05.2018**
(21) Anmeldenummer: 15709920.1
(22) Anmeldetag: 12.03.2015
(51) Int. Cl.: B65D 88/02, B65D 88/14, B65D 90/00, B65D 90/02, B32B 5/02, B32B 5/12, B32B 5/24, B32B 5/26, B32B 7/12, B32B 15/08, B32B 15/20, B32B 27/06, B32B 27/20

(54) **PLATTE FÜR EINE FRACHTPALETTE, VERFAHREN ZUR HERSTELLUNG EINER ENTSPRECHENDEN BODENPLATTE, VERFAHREN ZUR HERSTELLUNG EINES BODENELEMENTS**
BOTTOM PLATE FOR A FREIGHT PALLET, METHOD FOR PRODUCING A CORRESPONDING BOTTOM PLATE, METHOD FOR PRODUCING A BOTTOM ELEMENT
PLAQUE DE FOND POUR PALETTE, PROCÉDÉ DE FABRICATION D'UNE PLAQUE DE FOND, PROCÉDÉ DE FABRICATION D'UN ÉLÉMENT DE FOND

(30) Priorität: 12.03.2014 DE 102014103302; 26.05.2014 DE 102014107357
(43) Veröffentlichungstag der Anmeldung: 18.01.2017
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2015/055195
(87) Internationale Veröffentlichungsnummer: WO 2015/136043

(56) Entgegenhaltungen:
- WO-A1-2012/171963
- WO-A2-2010/124278
- US-A1- 2013 161 331
- US-A1- 2013 291 767
- US-B1- 6 187 411

## Beschreibung

Die vorliegende Erfindung betrifft eine Bodenplatte für eine Frachtpalette und/oder einen Frachtcontainer sowie ein Verfahren zur Herstellung einer entsprechenden Bodenplatte und eines Bodenelements.

Für den effektiven Transport von Ladung in Flugzeugen sind Frachtcontainer und Frachtpaletten unverzichtbar, da sie ein schnelles Be- und Entladen des Flugzeuges ermöglichen. Die überwiegende Anzahl von kommerziell eingesetzten Flugzeugen kann eine Vielzahl von Frachtcontainern oder Frachtpaletten aufnehmen. Die meisten Container bzw. Paletten sind normiert, so dass diese unabhängig von dem für den Transport verwendeten Flugzeug eingesetzt werden können. Bis vor einigen Jahren wurden Frachtcontainer ausschließlich aus Aluminium hergestellt, wobei das Eigengewicht eines derartigen Containers ca. 100 kg betrug. Momentan verwendete Container greifen teilweise auf leichtere Materialien zurück, so dass inzwischen Frachtcontainer mit einem Gewicht von ca. 60 kg verwendet werden.

Die Verringerung des Eigengewichts von verwendeten Containern oder Paletten bringt erhebliche finanzielle sowie ökologische Auswirkungen mit sich. Frachtcontainer sind beispielsweise aus der DE 69 702 821 T2, der DE 20 64 241 und der DE 102 008 005 010 A1 bekannt.

In US 6 187 411 B1 wird beispielsweise allgemein eine Verbundplatte beschrieben, die einen Schaumstoffkern und sowie eine obere und untere Faserschicht aufweist. Der Schaumstoffkern ist zwischen diesen Faserschichten angeordnet und mit diesen vernäht.

Bei dem Aufbau eines Frachtcontainers oder einer Frachtpalette ist es wesentlich, wie der Frachtboden ausgestaltet ist. Auf diesem ruht die gesamte Last der verladenen Frachtstücke. Des Weiteren werden die Frachtcontainer oder Frachtpaletten häufig unsachgemäß zwischengeparkt, so dass teilweise große punktuelle Lasten auf die Frachtböden wirken. Frachtpaletten und Frachtcontainer werden vollautomatisch oder teilweise automatisch auf dem Frachtdeck des Flugzeugs an einer vorgegebenen Position geparkt und verriegelt. Für den Antrieb der Frachtcontainer und Frachtpaletten sorgen in das Frachtdeck eingelassene Rollenantriebseinheiten oder Frachtantriebseinheiten. Diese Frachtantriebseinheiten verfügen über Rollen, die mit einem Elastomer beschichtet sind und am Frachtboden ansetzen, um entsprechende Kräfte aufzubringen. Bei der Konstruktion von Frachtcontainern ist es daher notwendig, die Frachtcontainerböden bzw. Frachtböden derart auszugestalten, dass ausreichend Kraft mittels der Rollen übertragen werden kann. Auch hier wirken hohe Kräfte auf Teilbereiche der Frachtböden, die zu einer schnellen Abnutzung führen können.

Aus dem Stand der Technik, beispielsweise aus der WO 2010/124278 A2, der US 2013/0291767 A1 und der US 2013/0161331 A1, sind bereits aus Verbundwerkstoffen ausgebildete Frachtböden für Frachtcontainer bzw. Frachtpaletten bekannt. Es hat sich jedoch gezeigt, dass bei derartigen Verbundplatten im Verbindungsbereich mit Metallrahmen Brüche oder Risse auftreten können, sofern punktuelle Lasten auf dem Verbindungsbereich aufgebracht werden. Aus der WO 2012/171963 A1 ist es bekannt, auch die Seitenwände oder ein Dachelement eines Frachtcontainers aus Verbundwerkstoffen bzw. Verbundplatten herzustellen.

Ausgehend von diesem Stand der Technik ist es Aufgabe der vorliegenden Erfindung, eine Bodenplatte für eine Frachtpalette und/oder einen Frachtcontainer bereitzustellen, welche die vorerwähnten Nachteile überwinden. Insbesondere soll der Verbindungsbereich zwischen einer Bodenplatte und zugehörigem Rahmen verbessert werden. Gleichzeitig sollen die neuen Bodenplatten leicht, funktionell einsetzbar und robust sein.

Diese Aufgabe wird durch eine Bodenplatte gemäß dem Anspruch 1 gelöst.

Insbesondere wird diese Aufgabe durch eine Bodenplatte für eine Frachtpalette und/oder einen Frachtcontainer gelöst, welche umfasst:
- mindestens einen Hybridkern mit mindesten einer, vorzugsweise kunstharzdurchsetzten, Schaumstoffschicht, die zwischen einer ersten Kernschicht aus faserverstärktem Kunststoff und einer zweiten Kernschicht aus faserverstärktem Kunststoff eingelagert ist, wobei der Hybridkern einen Randbereich zur Herstellung einer, insbesondere flächigen, stoffschlüssigen Verbindung zwischen den Kernschichten, umfasst
   und
- eine Auflageschicht aus mindestens einer Metalllegierung, insbesondere aus einer Aluminiumlegierung, wobei der Hybridkern und die Auflageschicht, vorzugsweise durch Stoffschluss, miteinander verbunden sind, wobei die Dicke der Schaumstoffschicht in einem Übergangsbereich zu dem Randbereich hin abnimmt, wobei der Übergangsbereich und der Randbereich Randfaserlagen, insbesondere mindestens zwei oder vier Randfaserlagen, umfassen, die die erste Kernschicht im Übergangsbereich und/oder im Randbereich abschnittsweise überdecken.

Bei der ersten und/oder der zweiten Kernschicht aus faserverstärktem Kunststoff kann es sich um Schichten aus kohlenstofffaserverstärkten Kunststoff handeln.

Der Hybridkern wird vorzugsweise derart hergestellt, dass ein schaumstofffreier Randbereich mindestens eine Breite von 30 mm, vorzugsweise von 50 mm, aufweist. Das heißt, der Hybridkern weist umfangsseitig mindestens einen Rand von 30 mm auf, welcher im Wesentlichen schaumstofffrei ausgebildet ist, d.h. keinen Schaumstoff aufweist.

Als kunstharzdurchsetzte Schaumstoffschicht kann eine Schaumstoffschicht mit zelliger Struktur und niedriger Dichte verwendet werden. Die Schaumstoffschicht kann zumindest teilweise mit Kunstharz durchsetzt sein. Die Verwendung der Schaumstoffschicht führt dazu, dass die erfindungsgemäße Bodenplatte ein geringes Gewicht aufweist, wobei Kunstharz-Brücken im Schaumstoff die Konstruktion versteifen.

Vorzugsweise erstrecken sich Kunstharz-Brücken als Stützstruktur vertikal zu der Bodenplatte, so dass diese an der Schaumstoffschicht anliegende Kernschichten und/oder Faserlagen fest miteinander verbindet. Die Stützstruktur kann (in einer Draufsicht) eine rechteckige oder wabenförmige oder runde Form aufweisen, um vertikal wirkende Kräfte aufzunehmen.

Die Kernschichten und die Schaumstoffschicht können durch ein Aufbringen eines Kunstharzes miteinander verbunden werden. Vorzugsweise erfolgt ein Aushärten des Kunststoffs bei Temperaturen zwischen 100 und 200°C, insbesondere zwischen 110 und 190°C, insbesondere zwischen 150 und 180°C. Eine bevorzugte Aushärtungstemperatur beträgt 135°C. Das Aushärten der Kernschicht bzw. der Kernschichten kann gleichzeitig mit dem Verbinden der Auflageschicht mit dem Hybridkern erfolgen. Alternativ kann die Auflageschicht mittels PU-Klebstoff mit dem Hybridkern in einem zeitlich nachgelagerten Fertigungsschritt verklebt werden.

Die Dicke der Schaumstoffschicht nimmt in einem Übergangsbereich zu dem Randbereich hin ab. Die abnehmende Dicke kann durch eine stärkere Kompression des Schaumstoffs erzielt werden.

An den eingangs genannten Randbereich bzw. an den schaumstofffreien Randbereich schließt sich vorzugsweise vollumfänglich, insbesondere innenumfänglich, ein Übergangsbereich an, welcher sowohl Schaumstoff, als auch faserverstärkten Kunststoff, insbesondere kohlenstofffaserverstärkten Kunststoff, aufweist.

Der Hybridkern ist in anderen Worten erfindungsgemäß derart ausgebildet, dass vollumfangsseitig ein (schaumstofffreier) Randbereich ausgebildet ist, an welchen sich in Richtung der Hybridkern-Mitte ein Übergangsbereich anschließt.

Die Dicke der Schaumstoffschicht nimmt im Übergangsbereich in Richtung des (schaumstofffreien) Randbereichs kontinuierlich und/oder schrittweise ab. In anderen Worten wird die Dicke der Schaumstoffschicht in Richtung des (schaumstofffreien) Randbereiches demnach in Richtung der Außenkante des Hybridkerns geringer.

Die Dicke eines faserverstärkten Kunststoffs und/oder eine Lagenanzahl von Faserlagen in dem/einem Übergangsbereich nimmt zu dem Randbereich hin zu. Beispielsweise kann die Dicke des Kunststoffs bzw. der Kunststoffschicht pro Längeneinheit um mindestens 3 % zunehmen.

In anderen Worten nimmt die Dicke des faserverstärkten Kunststoffes im Übergangsbereich in Richtung des (schaumstofffreien) Randbereichs kontinuierlich und/oder schrittweise zu. In wieder anderen Worten wird der Wert der Dicke des faserverstärkten Kunststoffes im Übergangsbereich in Richtung des (schaumstofffreien) Randbereiches, also in Richtung der Außenkante des Hybridkerns, kontinuierlich und/oder schrittweise größer.

Vorzugsweise ist die Dicke bzw. die Gesamtdicke des Hybridkerns im Übergangsbereich konstant, wobei die Volumen-Anteile der Schaumstoffschicht und des faserverstärkten Kunststoffes gegenläufig ab- bzw. zunehmen. Es ist auch möglich, dass die Dicke der Schaumstoffschicht kontinuierlich abnimmt und die Dicke des faserverstärkten Kunststoffs im Übergangsbereich schrittweise zunimmt. Auch die gegenteilige Ausführung, also eine schrittweise Abnahme hinsichtlich der Schaumstoffschichtdicke und eine kontinuierliche Zunahme der faserverstärkten Kunststoff-Dicke ist denkbar.

Aufgrund der Ausbildung eines Übergangsbereichs mit variabler Dicke der Schaumstoffschicht sowie variabler Dicke des faserverstärkten Kunststoffs, treten bei Verbindung der erfindungsgemäßen Bodenplatte mit einem Rahmen keine Bruchkanten auf, da aufgrund des seitlichen (schaumstofffreien) Randbereichs und des Übergangsbereichs die auf die Bodenplatte über einen Rahmen aufgebrachte Kräfte optimal verteilt werden.

Der faserverstärkte Kunststoff des Übergangsbereiches kann aus mehreren Faserlagen und/oder aus mehreren Schichten bestehen, die vorzugsweise derart übereinander angeordnet sind, dass die Dicke des faserverstärkten Kunststoffs in Richtung des (schaumstofffreien) Randbereichs kontinuierlich und/oder schrittweise zunimmt.

Der faserverstärkte Kunststoff des Übergangsbereichs kann beispielsweise aus der ersten und/oder zweiten Kernschicht des Hybridkerns gebildet werden. Des Weiteren ist es denkbar, dass der faserverstärkte Kunststoff des Übergangsbereichs aus mindestens einer, vorzugsweise mehrerer, zusätzlich angeordneter bzw. eingelagerter Kernschichten und/oder Faserlagen gebildet wird.

Theoretisch ist es denkbar, dass der faserverstärkte Kunststoff durch die zweite Kernschicht aus faserverstärktem Kunststoff gebildet wird. In diesem Fall ist es denkbar, dass die zweite Kernschicht um die kunstharzdurchsetzte Schaumstoffschicht nach unten in Richtung der ersten Kernschicht geführt und umgeschlagen wird. Mittels Wicklung und/oder Faltung des Endabschnitts der zweiten Kernschicht und/oder Faserlagen der zweiten Kernschicht unterhalb der Schaumstoffschicht, also zwischen der Schaumstoffschicht und der ersten Kernschicht, kann eine derartige faserverstärkte Kunststoffschicht bzw. ein derartiger faserverstärkter Kunststoff gebildet werden, dessen Dicke zu dem (schaumstofffreien) Randbereich hin kontinuierlich und/oder schrittweise zunimmt.

Des Weiteren ist es erfindungsgemäß möglich, dass mehrere, vorzugsweise oberhalb der Schaumstoffschicht angeordnete bzw. eingelagerte Faserlagen nach unten, d.h. in Richtung der ersten Kernschichten geführt werden und um die Schaumstoffschicht umgeschlagen werden. In anderen Worten werden die Endabschnitte mehrerer oberhalb der Schaumstoffschicht angeordneten bzw. eingelagerten Faserlagen zwischen der Schaumstoffschicht und der ersten Kernschicht angeordnet. Die umgeschlagenen bzw. umgeklappten Faserlagen weisen diesbezüglich unterschiedliche Längen auf, so dass die zusätzlichen Faserlagen derart übereinander angeordnet werden, dass die Dicke des faserverstärkten Kunststoffs des Übergangsbereichs zu dem (schaumstofffreien) Randbereich hin kontinuierlich und/oder schrittweise zunimmt. Demnach nehmen die Längen der zusätzlichen Faserlagen gemäß umgeschlagener Anordnung in Richtung der Auflageschicht, welche die Unterseite der Bodenplatte definiert, zu.

Die Randfaserlagen, bei welchen es sich vorzugsweise um kohlenstofffaserverstärkte Kunststoffe handelt, können im Übergangsbereich zumindest abschnittsweise zwischen der ersten Kernschicht und der Schaumstoffschicht eingelagert sein. Vorzugsweise sind sie aus Faserstreifen hergestellt. Die Streifenbreiten der Randfaserlagen nehmen vorzugsweise zur Oberseite der Bodenplatte hin ab.

Beispielsweise können die Randfaserlagen zur Bildung eines vorzugsweise rechteckigen Rahmens angeordnet sein. Der Randbereich kann demnach als, vorzugsweise rechteckiger, Rahmen den Hybridkern umgebend ausgebildet sein.

In einem Ausführungsbeispiel weist der Hybridkern mindestens eine erste Randfaserlage aus faserverstärktem Kunststoff, insbesondere kohlenstofffaserverstärkten Kunststoff, auf, die zwischen der ersten Kernschicht und der Schaumstoffschicht eingelagert ist und streifenförmig zumindest abschnittsweise die Randabschnitte der ersten Kernschicht bedeckt. Demnach ist die erste Randfaserlage aus mehreren, insbesondere vier, Faserstreifen gebildet, welche einen Rahmen bilden, und welche lediglich auf den Randabschnitten der ersten Kernschicht angeordnet sind.

Weiterhin kann der Hybridkern mindestens eine zweite Randfaserlage aus faserverstärktem Kunststoff, insbesondere kohlenstofffaserverstärktem Kunststoff, umfassen, die zwischen der ersten Randfaserlage und der Schaumstoffschicht eingelagert ist und streifenförmig zumindest abschnittsweise die äußeren Randabschnitte der ersten Randfaserlage bedeckt, wobei die Streifenbreite der zweiten Randfaserlage geringer als die Streifenbreite der ersten Randfaserlage ist. In anderen Worten sind die Faserstreifen der ersten Randfaserlage abschnittsweise von Faserstreifen der zweiten Randfaserlage bedeckt. Da die Streifenbreite der zweiten Randfaserlage geringer als die Streifenbreite der ersten Randfaserlage ist, werden die Faserstreifen der ersten Randfaserlage nur teilweise bedeckt.

Des Weiteren kann der Hybridkern mindestens eine dritte Randfaserlage aus faserverstärktem Kunststoff, insbesondere kohlenstofffaserverstärktem Kunststoff, umfassen, wobei die dritte Randfaserlage zwischen der zweiten Randfaserlage und der Schaumstoffschicht eingelagert ist und streifenförmig zumindest abschnittsweise die äußeren Randabschnitte der zweiten Randfaserlage bedeckt, wobei die Streifenbreite der dritten Randfaserlage geringer als die Streifenbreite der zweiten Randfaserlage ist. In anderen Worten werden die Faserstreifen der zweiten Randfaserlage von Faserstreifen der dritten Randfaserlage abschnittsweise bedeckt. Da die Streifenbreite der dritten Randfaserlage geringer als die Streifenbreite der zweiten Randfaserlage ist, bedecken die Faserstreifen der dritten Randfaserlage die Faserstreifen der zweiten Randfaserlage nur teilweise.

Des Weiteren kann der Hybridkern mindestens eine vierte Randfaserlage aus faserverstärktem Kunststoff, insbesondere kohlenstofffaserverstärktem Kunststoff, umfassen, wobei die vierte Randfaserlage zwischen der dritten Randfaserlage und der Schaumstoffschicht eingelagert ist und streifenförmig zumindest abschnittsweise die äußeren Randabschnitte der dritten Randfaserlage bedeckt, wobei die Streifenbreite der vierten Randfaserlage geringer als die Streifenbreite der dritten Randfaserlage ist. In anderen Worten werden die Faserstreifen der dritten Randfaserlage durch die Fasertreifen der vierten Randfaserlage zumindest abschnittsweise bedeckt. Da die Streifenbreite der vierten Randfaserlage geringer als die Streifenbreite der dritten Randfaserlage ist, werden die Faserstreifen der dritten Randfaserlage nur teilweise von den Faserstreifen der vierten Randfaserlage bedeckt.

Bei den Randfaserlagen kann es sich um multiaxiale Gewebe und/oder Gelege handeln. Vorzugsweise sind es biaxiale Gewebe oder Gelege.

Auch die übrigen Gewebe und/oder Gelege sind vorzugsweise multiaxial. In einer Ausführungsform der Erfindung ist es möglich, als Deckschicht ein Gewebe aus glasfaserverstärktem Kunststoff zu verwenden. Dieses Gewebe weist zwei Faserausrichtungen auf. Vorzugsweise unterscheiden sich die beiden Faserausrichtungen eines Gewebes um 90° (z. B. eine 0/90° GFK-Lage). Die unter der Deckschicht angeordnete zweite Kernschicht ist vorzugsweise aus zwei CFK-Lagen gebildet, wobei die obere CFK-Lage, die der Deckschicht zugewandt ist, eine +/- 45° Faserausrichtung aufweist. Die untere Lage, die von der Deckschicht abgewandt ist, weist eine 0/90° Faserausrichtung auf.

Allgemein kann die Steifigkeit des Gesamtaufbaus der Bodenplatte durch das Vorsehen von mindestens zwei Gewebelagen die zueinander verdreht angeordnet sind erhöht werden. Hierbei handelt es sich vorzugsweise um biaxiale Gewebe in einer 0/90°-Ausrichtung. Die Verdrehung der beiden Lagen beläuft sich auf mindestens 20°, vorzugsweise auf 45°.

Als äußere Oberflächen werden bevorzugt verschleißarme und stoßfeste Materialien, wie z. B. glasfaserverstärkter Kunststoff verwendet. In den mittleren bzw. inneren Lagen/Schichten der Bodenplatte können kohlenstofffaserverstärkte Kunststoffe verwendet werden. Somit wird vermieden, dass die kohlenstofffaserverstärkten Kunststoffe durch zu transportierende Güter oder Gabelstapler beschädigt werden.

Der Hybridkern kann des Weiteren mindestens eine fünfte, insbesondere mindestens eine sechste, insbesondere mindestens eine siebte usw., Randfaserlage umfassen.

Auf der der Auflageschicht abgewandten Seite des Schaumstoffs können mindestens zwei Faserlagen, vorzugsweise drei Faserlagen, aus Kunststoff, insbesondere kohlenstofffaserverstärktem Kunststoff, angeordnet sein, welche unterschiedliche Faserausrichtungen aufweisen. In anderen Worten umfasst die zweite Kernschicht mindestens zwei Faserlagen, vorzugsweise drei Faserlagen, welche unterschiedliche Faserausrichtungen aufweisen, wobei sich eine erste Faserausrichtung einer Faserlage vorzugsweise um mindestens 20 Grad oder um mindestens 30 Grad oder um mindestens 40 Grad oder um mindestens 45 Grad und um maximal 90 Grad von einer zweiten Faserausrichtung einer weiteren Faserlage unterscheidet. Bei den Winkelangaben kann es sich um absolute Winkel handeln. Der Absolutwinkel kann dabei derart definiert sein, dass dieser der kleinste absolute Winkelwert zwischen zwei Faserausrichtungen ist.

Sofern drei Faserlagen vorgesehen sind bzw. verwendet werden, sind vorzugsweise zwei der Faserlagen, welche nicht direkt übereinander angeordnet sind, vorzugsweise derart ausgebildet, dass diese übereinstimmende Faserausrichtungen aufweisen. Eine weitere, zwischen den beiden Faserlagen mit gleicher Faserausrichtung angeordnete Faserlage weist hingegen eine zweite Faserausrichtung auf, welche sich um mindestens 20 Grad oder um mindestens 30 Grad oder um mindestens 40 Grad oder um mindestens 45 Grad und um maximal 90 Grad von der ersten Faserausrichtung der beiden Faserlagen unterscheidet.

Mindestens eine Faserlage und/oder Kernschicht der Bodenplatte kann ein Fasernetz aus Kohlenstofffasern und/oder Glasfasern und/oder Aramidfasern umfassen. Die Fasern innerhalb eines Fasernetzes können zueinander im Wesentlichen rechtwinklig verlaufen, so dass sich ein Gitternetz ergibt. Demnach kann es sich bei mindestens einer Faserlage um ein biaxiales Gelege oder Gewebe handeln. Auch beliebig andere multiaxiale Gewebe oder Gelege können verwendet werden. Eine entsprechende Faserlage und/oder Kernschicht ist besonders haltbar. Auch die Faserlagen mit Fasernetzen können derart angeordnet sein, dass sich die Faserausrichtungen zweier Faserlagen um 20 oder 30 oder 40 oder 45 und um maximal 90 Grad unterscheiden. Auch diese Winkelangaben können als Absolutwinkel verstanden werden.

Vorzugsweise sind die einzelnen Schichten des Hybridkerns sowie die Schaumstoffschicht durch Stoffschluss miteinander verbunden. Beispielsweise kann eine Verbindung der Schichten sowie der Schaumstoffschicht durch Kunstharz hergestellt werden. Vorzugsweise weist die Schaumstoffschicht die bereits beschriebene Stützstruktur bzw. Brückenstruktur auf, die sich im Wesentlichen senkrecht zu der Faserausrichtung bzw. den Faserausrichtungen der ersten und der zweiten Kernschicht erstreckt.

Die Bodenplatte ist gemäß vorliegender Erfindung derart ausgebildet, das Gewicht einer Frachtpalette und/oder eines Frachtbodens dadurch zu reduzieren, dass die Bodenplatte aus mehreren Schichten, insbesondere in einer Sandwich-Bauweise, hergestellt wird. Für die Schichten werden sowohl Materialien aus Metall als auch aus Kunststoff verwendet. Hierbei werden gegebene Anforderungen, z.B. gute Reib- und Verschleißverhältnisse, berücksichtigt, wobei ein insgesamt sehr stabiler Verbundwerkstoff oder Komposit-Werkstoff bereitgestellt wird.

Die Verbindung der aus einer Metalllegierung, insbesondere aus einer Aluminium-Legierung, bestehenden Auflageschicht mit der Kernschicht erfolgt vorzugsweise durch Stoffschluss. Beispielsweise kann ein Klebstoff, insbesondere ein Polyurethan-Klebstoff, zur Verbindung der Auflageschicht mit der Kernschicht verwendet werden.

Vorzugsweise dient die Auflageschicht aus der Metalllegierung als Außenschicht, an der die Frachtantriebseinheiten angreifen. Des Weiteren nimmt diese Schicht punktuelle Belastungen auf und verteilt sie flächig. Eine Aluminiumlegierung ist hier besonders geeignet, da sich in Verbindung mit herkömmlichen Rollen von Frachtantriebseinheiten ein guter Reibungskoeffizient ergibt. Die Kernschichten versteifen die gesamte Konstruktion und führen zu erheblichen Gewichtsersparnissen.

Die Auflageschicht kann eine Dicke von 0,5 mm bis 3,5 mm, insbesondere von 0,5 mm bis 2,5 mm, insbesondere von 0,7 mm bis 2,5 mm, insbesondere von 0,7 mm bis 2 mm, insbesondere von 1,0 mm bis 1,8 mm, insbesondere von 1,6 mm aufweisen. Vorzugsweise hat die Auflageschicht im Verhältnis zu der Dicke der gesamten Bodenplatte eine geringe Dicke, z.B. weniger als 50%, insbesondere weniger als 40%, insbesondere weniger als 30%, insbesondere weniger als 25%, der Gesamtdicke. Insofern können deutlich leichtere Frachtböden hergestellt werden.

Die aus vorzugsweise einer Aluminiumlegierung bestehende Auflageschicht kann eine eloxierte bzw. anodisierte, insbesondere eine schwarz eloxierte bzw. anodisierte, Schicht umfassen. Eine schwarz eloxierte bzw. schwarz anodisierte Schicht einer Auflageschicht dient einer verbesserten Rauch- bzw. Wärmedetektion, da entsprechende Sensoren im Zusammenhang mit schwarzen Oberflächen besser reagieren. Ein Temperaturanstieg kann mit Hilfe von Infrarotsensoren auf schwarzen Oberflächen sicher festgestellt werden. Vorzugsweise erfolgt eine entsprechende Detektion von unten her.

Die genannten Aluminiumlegierungen für die Auflageschicht können Aluminium-Knet-Legierungen sein, das verwendete Haupt-Legierungselement kann Kupfer sein, wobei Kupfer einen Bestandteil von 0,5 bis 9%, insbesondere von 0,7 bis 8%, einnehmen kann.

Vorzugsweise wird 7475 T761 als Material verwendet. Des Weiteren ist es denkbar, dass beispielsweise Materialien wie 7075 T6 oder 7075 T7 oder 2024 T3/T4, 2026 T3511, 2056 T3, 2524 T3, 5052, 6061 T4, 7075 T761 zur Verwendung kommen. Vorzugsweise wird die Auflageschicht aus derartigen Materialien gebildet, welche die Bodenplatte ausreichend versteifen und eine lange Lebensdauer unter Belastung haben. Beispielsweise ist es denkbar, dass die verwendenten Aluminiumlegierungen, Aluminiumlegierungen mit einer lösungsgeglühten und/oder wärmeausgelagerten und/oder überhärteten Wärmehandlung sind, so dass eine ausreichende Festigkeit erzielt wird.

Die Auflageschicht kann eine Festigkeit von mehr als 300 N/m², insbesondere von mehr als 400 N/m², insbesondere von mehr als 500 N/m² aufweisen. Insofern kann die Auflageschicht den Hybridkern vor hohen punktuellen Belastungen schützen. Die erfindungsgemäße Bodenplatte unterliegt bei der üblichen rauen Behandlung nur einer langsamen Abnutzung und ist sehr robust.

Die Auflageschicht weist vorzugsweise die gleiche Länge wie die erste Kernschicht des Hybridkerns auf. In anderen Worten reicht die Auflageschicht im Wesentlichen bis zu der Außenkante der ersten Kernschicht des Hybridkerns.

Prinzipiell ist es möglich, eine Bodenplatte lediglich aus zwei Elementen, nämlich einem Hybridkern und einer Auflageschicht zu bilden. Vorzugsweise kann jedoch mindestens eine weitere Schicht, nämlich eine Deckschicht, vorgesehen werden, die auf der der Auflageschicht abgewandten Seite der zweiten Kernschicht bzw. des Hybridkerns angeordnet ist.
Bei der Deckschicht handelt es sich um eine Verschleißschicht, die die Oberseite einer Bodenplatte bildet, d.h. auf welcher zu befördernde Güter auf einer Frachtpalette bzw. Koffer oder Ähnliches in einem Frachtcontainer abgestellt werden.

Die Deckschicht kann ein- bzw. mehrlagig ausgebildet sein. Die Deckschicht kann beispielsweise aus einer Metalllegierung, wie z. B. aus einer Aluminium-Legierung, und/oder einem glasfaserverstärkten Kunststoff und/oder einem Werkstoff aus der Gruppe der aromatischen Polyamide (z.B. Aramid) ausgebildet sein. Die Deckschicht kann den Hybridkern bzw. die oberste Kernschicht des Hybridkerns vor einer Abnutzung schützen und die Sandwich- bzw. Verbundkonstruktion insgesamt versteifen.

Demnach kann die Bodenplatte mindestens eine erste Faserlage bzw. Deckschichtlage, die auf der der Auflageschicht abgewandten Seite der zweiten Kernschicht angeordnet ist, aufweisen, wobei die erste Deckschichtlage aus faserverstärktem Kunststoff, insbesondere glasfaserverstärktem Kunststoff, eine erste Faserausrichtung aufweist. Bei der ersten Deckschichtlage kann es sich demnach um eine erste Faserlage aus Glasfaser und/oder Aramid handeln. Die erste Deckschichtlage bzw. die Deckschicht ist mit der zweiten Kernschicht vorzugsweise durch Stoffschluss verbunden. Der Stoffschluss kann mittels Klebstoff, insbesondere mittels Polyurethan-Klebstoff, hergestellt werden. In anderen Worten wird die erste Deckschicht mittels Polyurethan-Klebstoff mit der obersten Faserlage der zweiten Kernschicht des Hybridkerns verklebt bzw. stoffschlüssig verbunden.

Die Deckschicht kann des Weiteren mindestens eine zweite Faserlage bzw. zweite Deckschichtlage umfassen, die auf der ersten Deckschichtlage angeordnet ist, aufweisen, wobei die zweite Deckschichtlage aus faserverstärktem Kunststoff, insbesondere glasfaserverstärktem Kunststoff, eine zweite Faserausrichtung aufweist, wobei sich die erste Faserausrichtung der ersten Deckschichtlage vorzugsweise um mindestens 20 Grad oder um mindestens 30 Grad oder um mindestens 40 Grad oder um mindestens 45 Grad und um maximal 90 Grad von der zweiten Faserausrichtung unterscheidet.

Die Gesamtdicke der Deckschicht, d.h. die Gesamtdicke aller Deckschichtlagen kann 0,1 bis 1,0 mm, insbesondere 0,2 bis 0,8 mm, insbesondere 0,4 bis 0,7 mm, insbesondere 0,6 mm, betragen. Vorzugsweise hat die Deckschicht bzw. die Deckschichtlagen im Verhältnis zu der Dicke der Bodenplatte nur eine geringe Dicke, z.B. weniger als 15%, insbesondere weniger als 10%, insbesondere weniger als 8% der Gesamtdicke. Insofern können deutlich leichtere Bodenplatten hergestellt werden.

Die kunstharzdurchsetzte Schaumstoffschicht kann eine Dicke von 1,5 mm - 55,0 mm, insbesondere von 2,00 mm bis 5,00 mm, insbesondere von 3,00 mm bis 4,60 mm, insbesondere von 3,2 mm bis 3,8 mm, insbesondere von 3,64 mm, aufweisen. Des Weiteren ist es möglich, dass die Schaumstoffschicht eine Dicke von 1,5 mm bis 1,8 mm, insbesondere von 1,8 mm, aufweist. Außerdem kann die Schaumstoffschicht eine Dicke von 45 mm bis 55 mm, insbesondere von 48,75 mm, aufweisen. Die Angaben der Schaumstoffschichtdicken beziehen sich auf die Schaumstoffschicht im unkomprimierten Bereich des Hybridkerns, d.h. die Angaben der Schaumstoffschichtdicken betreffen insbesondere nicht den seitlichen (schaumstofffreien) Randbereich sowie den Übergangsbereich des Hybridkerns. Vorzugsweise hat die Schaumstoffschicht im Verhältnis zur Dicke der gesamten Bodenplatte eine große Dicke bzw. einen großen Anteil an der Gesamtdicke, z.B. mehr als 20%, insbesondere mehr als 30%, insbesondere mehr als 40%, insbesondere mehr als 45%, der Gesamtdicke. Insofern können deutlich leichtere Bodenplatten hergestellt werden, da das Gewicht der Schaumstoffschicht im Vergleich zu den anderen Kernschichten bzw. im Vergleich zu der Auflageschicht relativ gering ist.

In einer Ausführungsform der Erfindung ist es denkbar, dass die Schaumstoffschicht aus mehreren Schaumstofflagen besteht bzw. mehrere Schaumstofflagen umfasst. Die einzelnen Schaumstofflagen können im Vergleich zueinander unterschiedlichen Dicken aufweisen. Beispielsweise können bei einer derartigen Schaumstoffschicht aus mehreren Schaumstofflagen 3DCore-Schaumstofflagen verwendet werden.

Vorzugsweise sind die einzelnen Schaumstofflagen, die unterschiedlichen Dicken aufweisen, derart zueinander angeordnet, dass die Dicken zur Schaumstoffschichtmitte hin zunehmen. Mit anderen Worten nehmen die Dicken der Schaumstofflagen ausgehend von der Schaumstoffschichtmitte nach Außen hin ab. Beispielsweise sind die Schaumstofflagen symmetrisch zueinander angeordnet. Zu in der Schaumstoffschicht mittig angeordnete Lage können beidseitig Schaumstofflagen mit einer ersten Dicke angeordnet bzw. platziert sein, wobei die zweite Dicke von äußeren Schaumstofflagen geringer als die erste Dicke ist.

Die Schaumstofflagen der Schaumstoffschicht können durch Stoffschluss miteinander verbunden sein. Insbesondere sind die Schaumstofflagen durch den Auftrag und das Aushärten eines Kunstharzes miteinander verbunden. Der Anteil der Harzfüllung in der Schaumstoffschicht kann 20 % - 60 %, insbesondere 30 % - 50 %, insbesondere 40 %, betragen. Mit Hilfe einer derart gebildeten Schaumstoffschicht wird eine Stützstruktur zur Verfügung gestellt, die eine besonders hohe Druckfestigkeit aufweist. Mit Erhöhung des Harzanteils steigt die Druckfestigkeit an.

In einer weiteren Ausführungsform der Erfindung sind zwischen einzelnen, vorzugsweise zwischen mehreren, Schaumstofflagen Lagen aus faserverstärktem Kunststoff, insbesondere aus kohlenstofffaserverstärktem Kunststoff, eingelagert. Mit Hilfe einer derart gebildeten Schaumstoffschicht wird eine Stützstruktur zur Verfügung gestellt, die eine besonders hohe Druckfestigkeit aufweist. Bei der Ausbildung einer derartigen Schaumstoffschicht kann das Verbinden der einzelnen Schaumstofflagen und den Lagen aus faserverstärktem Kunststoff ebenfalls durch Stoffschluss erfolgen. Vorzugsweise sind die Schaumstofflagen und dazwischen eingelegten Lagen aus faserverstärktem Kunststoff durch den Auftrag und das Aushärten eines Kunstharzes miteinander verbunden. Der Anteil der Harzfüllung in der Schaumstoffschicht kann 2 % - 6 %, insbesondere 3 % - 5 %, insbesondere 4 %, betragen. Die Schaumstoffschicht ist demnach relativ leicht, kann jedoch sehr hohen Druckbelastungen Stand halten. Durch das Einbringen zusätzlicher Lagen aus faserverstärktem Kunststoff können auf eine Bodenplatte wirkende punktuelle Belastungen gleichmäßiger in der Schaumstoffschicht verteilt werden.

Erfindungsgemäß ist es möglich, dass die Harzbefüllung der Schaumstofflagen durch die jeweils überhalb der einzelnen Schaumstofflagen ausgebildeten Lagen aus faserverstärktem Kunststoff, insbesondere aus kohlenstofffaserverstärktem Kunststoff, erfolgen kann. Hierzu können die Lagen aus faserverstärktem Kunststoff einen Harzanteil von bis zu 85 % aufweisen. Alternativ ist es möglich jeweils eine Lage aus faserverstärktem Kunststoff mit einem Harzanteil von 40 - 45 % und zusätzlich eine Lage aus Harz überhalb jeder einzelnen Schaumstofflage auszubilden.

In einer weiteren Ausführungsform der Erfindung ist es möglich, dass die Schaumstoffschicht aus fünf Schaumstofflagen gebildet ist. Zwei mittig ausgebildete Schaumstofflagen können beispielsweise eine Dicke von jeweils 17 mm aufweisen. Unterhalb der beiden mittigen Schaumstofflagen, also in Richtung der Auflageschicht, ist vorzugsweise eine Schaumstofflage mit einer Dicke von beispielsweise 6 mm ausgebildet. Oberhalb der beiden mittigen Schaumstofflagen, also in Richtung der Decklage, können zwei weitere Schaumstofflagen ausgebildet sein, die jeweils eine Dicke von 6 mm aufweisen.

Die Harzbefüllung der Schaumstofflagen kann durch jeweils überhalb der einzelnen Schaumstofflagen ausgebildete Lagen aus faserverstärktem Kunststoff, insbesondere aus kohlenstofffaserverstärktem Kunststoff, erfolgen. Hierzu weisen die Lagen aus faserverstärktem Kunststoff einen Harzanteil von bis zu 85 % auf. Alternativ ist es möglich jeweils eine Lage aus faserverstärktem Kunststoff mit einem Harzanteil von 40 - 45 % und zusätzlich eine Lage aus Harz überhalb jeder einzelnen Schaumstofflage auszubilden.

Bei den beschriebenen Schaumstofflagen, die eine Dicke von 6 mm aufweisen, liegt vorzugweise eine Harzbefüllung von ca. 300 g/m² vor. Bei den beschriebenen Schaumstofflagen, die eine Dicke von 17 mm aufweisen, liegt vorzugweise eine Harzbefüllung von ca. 1.000 g/m² vor. Das Trockengewicht einer Schaumstofflage mit einer Dicke von 6 mm liegt beispielsweise bei 375 g/m². Diese Schaumstofflage kann bis zu 2.800 g/m² Harz aufnehmen. Es ist möglich, dieser Schaumstofflage zunächst mindestens 290 g/m² Harz hinzuzufügen. Aufgrund über oder unter der Schaumstofflage angeordneten weiteren Schichten oder Lagen, die mit Harz getränkt sind, kann die Schaumstofflage weitere 100 - 150 g/m² Harz aufnehmen.

Der Randbereich einer Bodenplatte, die eine Schaumstoffschicht mit mehreren Schaumstofflagen umfasst, kann verdichtet und/oder gequetscht ausgebildet sein.

Des Weiteren ist es denkbar, dass mindestens eine Schaumstofflage oder mehrere Schaumstofflagen oder alle Schaumstofflagen der Schaumstoffschicht nicht bis in den Randbereich der Bodenplatte ragen. D. h. es ist auch die Ausbildung eines schaumstofffreien Randbereichs oder eines Randbereichs mit abnehmender Schaumstoffschichtdicke denkbar.

Die Bodenplatte kann eine Dicke bzw. eine Gesamtdicke von 3,0 mm bis 65,0 mm, insbesondere von 4,0 mm bis 60,0 mm, insbesondere von 5,0 mm bis 9,00 mm, insbesondere von 6,0 mm bis 8,0 mm, insbesondere von 7,0 mm bis 8,0 mm, insbesondere von 7,6 mm, aufweisen.

Die Bodenplatte weist vorzugsweise angeschrägte Seiten auf, welche eine schräge Außenkante bilden, wobei die Außenkanten in Relation zu einer Bodenauflagefläche einen Winkel von 30 Grad bis 60 Grad, insbesondere von 35 Grad bis 55 Grad, insbesondere von 40 Grad bis 50 Grad, insbesondere von 45 Grad einschließen. In anderen Worten sind Seitenflächen, insbesondere alle vier Seitenflächen, der im Wesentlichen quaderförmigen Bodenplatte angeschrägt ausgebildet bzw. schräg ausgeführt, so dass schräge Außenkanten gebildet werden. Aufgrund der Ausbildung von angeschrägten Seiten weist die Bodenplatte im Querschnitt beispielsweise einen trapezförmigen Querschnitt auf. Die schräge Außenkante der Bodenplatte betrifft vorzugsweise sowohl den Hybridkern der Bodenplatte als auch die Deckschicht und/oder die Auflageschicht.

Bei der Bodenauflagefläche, welche zur Beschreibung des Winkels, welcher von der Außenkante gebildet wird, herangezogen wird, kann es sich um sämtliche Ablage- bzw. Auflageflächen handeln, auf welcher die Bodenplatte abgestellt wird. In anderen Worten handelt es sich um eine plane Abstellfläche, welche mit der Auflageschicht der Bodenplatte in Kontakt kommt. Die angeschrägten Seiten bzw. die schrägen Außenkanten verlaufen ausgehend von der Auflageschicht seitlich nach oben, d.h. die Auflageschicht weist vorzugsweise eine geringere Länge als die oberste Kernschicht des Hybridkerns bzw. die oberste Deckschicht des Hybridkerns auf.

Vorzugsweise weisen sowohl die Auflageschicht als auch der Hybridkern Außenkanten mit übereinstimmender Schräge auf, d.h. sowohl die Außenkanten des Hybridkerns als auch die Außenkanten der Auflageschicht schließen in Relation zu einer Bodenauflagefläche den gleichen Winkel ein, so dass die Außenkanten der Auflageschicht und die Außenkanten des Hybridkerns die Außenkanten der Bodenplatte bilden. Eine derartig mit schrägen Außenkanten versehene bzw. ausgebildete Bodenplatte kann besonderes einfach mit Rahmenprofilelementen verbunden werden.

Die Bodenplatte kann im Wesentlichen rechteckförmig ausgebildet sein bzw. eine Rechteckform aufweisen. Mindestens eine Ecke einer derartigen Bodenplatte kann eine Aussparung, insbesondere eine abgerundete Aussparung, aufweisen. Eine derartige Aussparung dient beispielsweise zur Verbindung mit einem Eckprofil um ein Bodenelement bzw. eine Frachtpalette zu bilden. Vorzugsweise sind alle vier Ecken einer Bodenplatte mit einer derartigen Aussparung versehen. Die Aussparung kann einen rechteckförmigen Umfang aufweisen, wobei die Ecken der Aussparung vorzugsweise abgerundet ausgebildet sind. Mit anderen Worten wird mindestens eine Ecke einer rechteckigen Bodenplatte durch eine Aussparung mit rechteckförmigen Umfang ersetzt, wobei die Aussparung derart ausgebildet ist, dass der Eckbereich der Bodenplatte durch zwei an der Außenkante ausgebildete Ecken und zwei senkrecht zu den jeweiligen Außenkanten angeordnete Aussparungskanten gebildet ist.

Grundsätzlich ist es möglich, dass anstelle des kohlenstofffaserverstärkten Kunststoffs einzelne oder mehrere Schichten der Bodenplatte aus derartigem faserverstärktem Material gefertigt sind, dessen Wärmeausdehnungskoeffizient dem Wärmeausdehnungskoeffizient der Auflageschicht aus einer Metalllegierung entspricht oder zumindest in etwa (z. B. ± 30 % oder ± 10 %) dem Wärmeausdehnungskoeffizient der Auflageschicht aus einer Metalllegierung entspricht. Die Auflageschicht ist vorzugweise aus einer Aluminiumlegierung hergestellt, sodass der Wärmeausdehnungskoeffizient des Materials dem Wärmeausdehnungskoeffizient der Aluminiumlegierung entspricht oder in etwa entspricht. Beispielsweise kann es sich bei dem Material um Polyamid 6.6 (PA 6.6) oder Polyethylenterephthalat (PET) oder Poly(p-phenylen-2,6-benzobisoxazol) (PPBO) handeln. Auch das Verwenden einer Glasfaserschicht anstelle eines kohlenstofffaserverstärkten Kunststoffs ist möglich.

Erfindungsgemäß ist es möglich, dass die Bodenplatte ein Innenhohlprofil aufweist, das zumindest im Randbereich ausgebildet ist. Vorzugsweise ist das Innenhohlprofil vollinnenumfänglich, d.h. ausgehenden von den Außenkanten der Bodenplatte auf allen vier Seiten der Bodenplatte ausgebildet. Das Innenhohlprofil kann aus Aluminium oder einer Aluminiumlegierung gebildet sein. Außerdem ist es möglich, dass das Innenhohlprofil aus einem Kunststoff, wie z. B. Polyamid 6.6 (PA 6.6) gebildet ist. Das Innenhohlprofil kann aus aus einem Duroplast als Pultrusionsprofil gebildet sein. Als Faserverstärkung sind sowohl Glasfasern als auch Kohlenstofffasern möglich. Bei einem Querschnitt durch die Bodenplatte wird der Querschnitt des Innenhohlprofils ersichtlich. Dieser kann beispielsweise rechteckig ausgebildet sein. Es ist möglich, dass die äußerste Seitenfläche des Innenhohlprofils einen seitlichen Rahmen oder einen seitlichen Rahmenabschnitt der Bodenplatte bildet. Mit Hilfe eines randseitig ausgebildeten Innenhohlprofils bzw. eines Innenhohlprofils das im Randbereich der Bodenplatte ausgebildet ist, kann ein solider Randbereich realisiert werden. In einem derartigen Randbereich können in einfacher Art und Weise Bohrungen eingebracht werden.

Ein Bodenelement für eine Frachtpalette und/oder einen Frachtcontainer kann mindestens eine vorbeschriebene Bodenplatte und mindestens einen Rahmen, insbesondere mit Rahmenprofilen, umfassen. Für das Bodenelement ergeben sich ähnliche Vorteile, wie diese bereits in Verbindung mit der Bodenplatte erläutert wurden.

Der Rahmen des Bodenelements kann mehrere, insbesondere vier, Hohlprofile umfassen. Bei den Hohlprofilen kann es sich beispielsweise um Doppelhohlprofile handeln. Auch die Ausbildung eines einfachen Hohlprofils ist möglich. Des Weiteren kann der Rahmen mindestens vier Außen-Eckprofile umfassen. Die Höhe der Hohlprofile sowie der Außen-Eckprofile beträgt maximal 15,0 mm bis 30,0 mm, insbesondere 20,0 mm bis 28,0 mm, insbesondere 22,0 mm bis 26,0 mm. Letztendlich bilden die Hohlprofile sowie die Außen-Eckprofile einen umlaufenden Rahmen, in welchen die Bodenplatte eingeschoben werden kann. Des Weiteren ist es möglich, dass die Hohlprofile und/oder die Außen-Eckprofile auf die Bodenplatte aufgeschoben werden. Die Hohlprofile und/oder Außen-Eckprofile können mit dem Bodenelement, insbesondere mit dem Innenhohlprofil verschraubt sein.

Der Rahmen des Bodenelements kann angeschrägte Auflageseiten umfassen, welche eine schräge Innenkanten bilden, wobei die Innenkanten in Relation zu einer Bodenauflagefläche einen Winkel von 30 Grad bis 60 Grad, insbesondere von 35 Grad bis 55 Grad, insbesondere von 40 Grad bis 50 Grad, insbesondere von 45 Grad, einschließen. Vorzugsweise liegen angeschrägte Seiten bzw. die vier angeschrägten Seiten einer Bodenplatte auf den angeschrägten Auflageseiten des Rahmens an, derart, dass die Unterseite der Bodenplatte bündig an dem Rahmen anliegt. Die Unterseite der Bodenplatte wird durch die Unterseite der Auflageschicht gebildet, so dass die Unterseite der Auflageschicht bündig an dem Rahmen anliegt, vorzugweise derart, dass die Unterkante der Auflageschicht auf Stoß zur Unterkante des Rahmens anliegt. In anderen Worten bilden die Unterseite der Bodenplatte und die Unterseite des Rahmens eine ebene Fläche.

Hinsichtlich der Bodenauflagefläche gelten die bereits aufgeführten Erklärungen.

Des Weiteren kann der Rahmen einen Flansch aufweisen, welcher mit mindestens einer angeschrägten Auflageseite des Rahmens einen Eingriffsabschnitt zur Verbindung des Rahmens mit einer Bodenplatte bildet, wobei der Flansch mindestens abschnittsweise auf der Bodenplatte, insbesondere auf der Oberseite der Bodenplatte, aufliegt und der Überlappungsbereich des Flansches mit der Bodenplatte 20,0 mm bis 50,0 mm, insbesondere 25,0 mm bis 45,0 mm, insbesondere 30,0 mm bis 40,0 mm, insbesondere 32,0 mm bis 38,0 mm, beträgt.

Die Oberseite der Bodenplatte kann entweder von der obersten Faserlage der zweiten Kernschicht oder, sofern vorhanden, von der obersten Deckschichtlage der Deckschicht gebildet werden. Der Flansch liegt ausgehend von der Außenkante des Hybridkerns in einem bestimmten Überlappungsbereich, vorzugsweise auf der Oberseite der Bodenplatte an. Der Flansch ist mindestens derart ausgebildet bzw. weist mindestens eine derartige Länge auf, dass zumindest der seitliche (schaumstofffreie) Randbereich, insbesondere sowohl der seitliche (schaumstofffreie) Randbereich als auch der Übergangsbereich des Hybridkerns, im Eingriffsabschnitt des Rahmens eingreift.

Mindestens ein Eckprofil und/oder ein Außen-Eckprofil eines Bodenelements kann bzw. können in einer Aussparung der Bodenplatte angeordnet und mit dieser verbunden sein, wobei die Aussparung an einer Ecke der rechteckförmigen Bodenplatte ausgebildet ist. Hinsichtlich der Ausbildung der Aussparung wird auf die bereits aufgeführten Erklärungen im Zusammenhang mit der Bodenplatte verwiesen.

Des Weiteren ist es möglich, dass vier Eckprofile mit vier Längsprofilen einen abschlussleistenartigen Rahmen bilden.

Eine Frachtpalette kann eine vorher genannte Bodenplatte und/oder ein vorher genanntes Bodenelement aufweisen. Für die Frachtpalette ergeben sich ähnliche Vorteile, wie diese bereits in Verbindung mit der Bodenplatte und/oder mit dem Bodenelement erläutert wurden.

Mindestens zwei Bodenplatten und/oder mindestens zwei Bodenelemente können miteinander verbunden sein, wobei die verbundenen Bodenplatten und/oder verbundenen Bodenelemente vergrößerte Bodenplatten und/oder vergrößerte Bodenelemente bilden. Mit Hilfe mehrerer, insbesondere gleichartig ausgebildeter Bodenplatten und/oder Bodenelementen können demnach modulartig variable Frachtpalettengrößen zur Verfügung gestellt werden, wobei die Frachtpalettengrößen an die zu transportierenden Güter bzw. an zu transportierende Frachtcontainer angepasst werden können. Demnach ist es beispielsweise möglich einen 10ft-Container mit einer Frachtpalette aus einer Bodenplatte bzw. einem Bodenelement zu transportieren. Zum Transport eines 20ft-Containers kann eine Frachtpalette durch Verbindung von zwei Bodenplatten bzw. zwei Bodenelementen gebildet werden.

Die genannte Aufgabe wird des Weiteren durch ein entsprechendes Herstellungsverfahren zur Herstellung einer Bodenplatte gemäß Anspruch 16 gelöst.

Das Herstellungsverfahren umfasst die folgenden Schritte:
- Anordnen einer Schaumstoffschicht zwischen einer ersten faserverstärkten Kernschicht, vorzugsweise aus CFK, und einer zweiten faserverstärkten Kernschicht, vorzugsweise aus CFK, derart, dass die Kernschichten die Schaumstoffschicht an den Seiten der Schaumstoffschicht überragen und dass die Dicke der Schaumstoffschicht in einem Übergangsbereich zu einem Randbereich hin abnimmt;
- Anordnen von Randfaserlagen im Übergangsbereich und im Randbereich, wobei die Randfaserlagen die erste Kernschicht im Übergangsbereich und/oder im Randbereich zumindest abschnittsweise überdecken;
- Aushärten eines aufgebrachten Kunstharzes zur Herstellung eines Hybridkerns derart, dass ein Stoffschluss zwischen den Kernschichten und der Schaumstoffschicht, insbesondere in einem Randbereich, hergestellt wird;
- Herstellen einer Auflageschicht aus einer Metalllegierung, insbesondere aus einer Aluminiumlegierung;
- Verbinden der Auflageschicht mit dem Hybridkern durch Stoffschluss, insbesondere durch Auftragen eines Klebstoffs, vorzugsweise eines Polyurethan-Klebstoffs, auf mindestens einer der zu verbindenden Flächen des Hybridkerns und/oder der Auflageschicht.

Auch im Zusammenhang mit dem Herstellungsverfahren gilt, dass anstelle des kohlenstofffaserverstärkten Kunststoffs einzelne oder mehrere Schichten der Bodenplatte aus einem Material, insbesondere einem faserverstärktem Material, gefertigt sind, dessen Wärmeausdehnungskoeffizient dem Wärmeausdehnungskoeffizient der Auflageschicht aus einer Metalllegierung entspricht oder zumindest in etwa dem Wärmeausdehnungskoeffizient der Auflageschicht aus einer Metalllegierung entspricht. Beispielsweise kann es sich bei dem Material um Polyamid 6.6 (PA 6.6) oder Polyethylenterephthalat (PET) oder Poly(p-phenylen-2,6-benzobisoxazol) (PPBO) handeln. Auch das Verwenden einer Glasfaserschicht anstelle eines kohlenstofffaserverstärkten Kunststoffs ist möglich.

Vor der Herstellung des Hybridkerns erfolgt vorzugsweise ein Herstellen der Schaumstoffschicht, wobei das Herstellen ein Einarbeiten bzw. Vorsehen von Aussparungen, insbesondere wabenförmige Aussparungen, umfasst.

Das Herstellen der Schaumstoffschicht kann das Verbinden mehrerer Schaumstofflagen mittels Stoffschluss, insbesondere durch Aufbringen und Aushärten eines Kunstharzes, umfassen.

Des Weiteren können vor dem Aufbringen und Aushärten eines Kunstharzes in Verbindung mit dem Herstellen einer Schaumstoffschicht, zwischen einzelne Schaumstofflagen Lagen aus faserverstärktem Kunststoff, insbesondere aus kohlenstofffaserverstärktem Kunststoff, eingebracht bzw. angeordnet werden.

Die Schaumstoffschicht kann auch durch das Einbringen von Harzlagen und/oder Harzfolien erfolgen, insbesondere dann wenn in die Schaumstoffschicht mindestens eine Lage auch faserverstärktem Kunststoff eingebracht wird.

Da die Schaumstoffschicht vorzugsweise kürzer als die beiden Kernschichten ausgebildet ist, kann die Schaumstoffschicht derart zwischen den beiden Kernschichten eingelagert werden, dass die Kernschichten die Schaumstoffschicht an den Seiten der Schaumstoffschicht überragen.

Die Herstellung des Hybridkerns erfolgt vorzugsweise durch Verpressen der Kernschichten und/oder von Faserlagen mit der kunstharzdurchsetzten Schaumstoffschicht bei einer derartigen Temperatur, dass ein aufgebrachtes Kunstharz verflüssigt wird und durch die Aussparungen der Schaumstoffschicht penetriert und in die Kernschichten und/oder in die Deckschicht dringt.

Des Weiteren kann ein Anordnen eines Abreißgewebes auf einer der Schaumstoffschicht abgewandten Seite der ersten Kernschicht vor dem Aushärten und ein Abreißen des Abreißgewebes vor dem Auftragen des Klebstoffs vorgenommen werden. Das auf der ersten Kernschicht des Hybridkerns aufgebrachte Abreißgewebe hinterlässt beim Abreißen eine unebene, aufgeraute Schicht, so dass das Verbinden bzw. Verkleben der Auflageschicht mit der ersten Kernschicht des Hybridkerns verbessert wird.

Das Verbinden der vorzugsweise aus einer Metalllegierung bestehenden Auflageschicht mit dem Hybridkern erfolgt durch Stoffschluss, insbesondere durch Verklebung. Hierzu wird beispielsweise mit einem Zahnspachtel eine mindestens 1 mm Dicke Klebeschicht auf eine der zu verbindenden Flächen des Hybridkerns und/oder der Auflageschicht aufgetragen. Bei der Klebeschicht handelt es sich vorzugsweise um eine Polyurethan-Klebeschicht. Nach dem Verbinden und Verpressen der Auflageschicht mit dem Hybridkern wird die aufgetragene Klebeschicht von einer Ausgangsdicke von 1 mm auf eine Enddicke von 0,5 mm komprimiert. Bei der Herstellung einer dickeren Bodenplatte ist es möglich, dass die aufgetragene Klebeschicht von einer Ausgangsdicke von 1,5 mm auf eine Enddicke von 0,75 mm komprimiert wird.

Der Hybridkern wird vorzugsweise derart hergestellt, dass der schaumstofffreie Randbereich mindestens eine Breite von 30 mm, vorzugsweise von mindestens 50 mm, aufweist. Das heißt, der Hybridkern weist umfangsseitig mindestens einen Rand von 30 mm auf, welcher im Wesentlichen schaumstofffrei ausgebildet ist, d.h. keinen Schaumstoff aufweist.

Des Weiteren ist es möglich, dass die Außenkante(n) der Auflageschicht vor der Verbindung mit dem Hybridkern angeschrägt wird bzw. werden, derart, dass die Außenkante(n) in Relation zu einer Bodenauflagefläche einen Winkel von 30 Grad bis 60 Grad, insbesondere von 35 Grad bis 55 Grad, insbesondere von 40 Grad bis 50 Grad, insbesondere von 45 Grad, einschließt bzw. einschließen. Hinsichtlich der Bodenauflagefläche wird auf vorherige Erklärungen verwiesen. Vorzugsweise weisen die Außenkanten der Auflageschicht einen im Vergleich zu den schrägen Außenkanten des Hybridkerns übereinstimmende Schrägheit bzw. einen übereinstimmenden Schrägheitsgrad, also einen übereinstimmenden Winkel in Relation zu einer Bodenauflagefläche, auf.

Des Weiteren kann der Hybridkern beim Aushärten derart in einer Form gepresst werden, dass angeschrägte Außenkanten mit einem Winkel von 30 Grad bis 60 Grad, insbesondere von 35 Grad bis 55 Grad, insbesondere von 40 Grad bis 50 Grad, insbesondere von 45 Grad, entstehen.

Alternativ ist es möglich, dass der Hybridkern und die Auflageschicht zunächst verbunden werden und die Außenkanten der Bodenplatte insgesamt angeschrägt werden, derart, dass die schrägen Außenkanten der Bodenplatte in Relation zu einer Bodenauflagefläche einen Winkel von 30 Grad bis 60 Grad, insbesondere von 35 Grad bis 55 Grad, insbesondere von 40 Grad bis 50 Grad, insbesondere von 45 Grad, einschließen.

In einer weiteren Ausführungsform der Erfindung weist die Auflageschicht aus einer Metalllegierung, insbesondere aus einer Aluminiumlegierung, Löcher und/oder Ausnehmungen auf, so dass beim Verbinden, insbesondere Verpressen, der Auflageschicht mit dem Hybridkern, Luft durch die Löcher bzw. durch die Ausnehmungen entweichen kann.

Ferner ist es möglich, dass in mindestens einer Ecke der vorzugsweise rechteckförmigen Bodenplatte eine, insbesondere abgerundete, Aussparung eingebracht wird.

Des Weiteren kann vor dem Aufbringen und Aushärten eines Kunstharzes zwischen die erste faserverstärkte Kernschicht und die zweite faserverstärkte Kernschicht oder zwischen die erste faserverstärkte Kernschicht und die Auflageschicht, vorzugsweise vollinnenumfänglich, ein Innenhohlprofil angeordnet werden.

Die genannte Aufgabe wird des Weiteren durch ein Verfahren zur Herstellung eines Bodenelements gemäß Anspruch 24 gelöst.

Das Herstellungsverfahren kann die folgenden Schritte umfassen:
An eine Bodenplatte, insbesondere an eine vorher aufgeführte erfindungsgemäße Bodenplatte, können Hohlprofile, insbesondere mindestens vier Hohlprofile, und mindestens vier Außen-Eckprofile angebracht und mit dieser befestigt, insbesondere verschraubt, werden. Bei den Hohlprofilen handelt es sich beispielsweise um Doppelhohlprofile. Die zur Verschraubung der Bodenplatte mit den Rahmenprofilen notwendigen Löcher sind im Randbereich und/oder im Übergangsbereich des Hybridkerns ausgebildet. Vor dem Verschrauben der Hohlprofile mit der Bodenplatte, werden die Hohlprofile auf den Randbereich der Bodenplatte aufgeschoben. Die Hohlprofile weisen U-Profile bzw. U-förmige Verbindungsprofile auf, sodass die Hohlprofile auf die Bodenplatte, insbesondere auf den Randbereich der Bodenplatte, aufgeschoben werden können. Die U-Profile umklammern den Randbereich der Bodenplatte. Beispielsweise sind die Bohrungen versetzt angeordnet. Es ist möglich, dass die Bohrungen im Bereich von Innenhohlprofilen der Bodenplatte ausgebildet sind bzw. durch derartige Innenhohlprofile führen. Außerdem ist es möglich, dass in Loch- oder Sitzschienen von Rahmenteilen Bohrungen ausgebildet sind.

In einer weiteren Ausführungsform hinsichtlich des Verfahrens zur Herstellung eines Bodenelements ist es möglich, dass an die Bodenplatte ein abschlussleistenartiger Rahmen angebracht wird. Vorzugsweise wird dieser abschlussleistenartige Rahmen mit vier Eckprofilen und vier Längsprofilen gebildet, wobei die Eckprofile und die Längsprofile vor dem Anbringen der Hohlprofile und der Außen-Eckprofile mit der Bodenplatte verbunden werden. Bei den Eckprofilen und/oder den Längsprofilen kann es sich um bereits beschriebene Innenhohlprofile handeln.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden.

Hierbei zeigen:
- Fig. 1: Einen schematischen Querschnitt durch eine Bodenplatte;
- Fig. 2: Eine schematische Darstellung aller Schichten einer Boden-platte;
- Fig. 3: Einen Querschnitt durch eine Bodenplatte mit Darstellung des Randbereichs;
- Fig. 4: Einen Querschnitt durch eine mit einem Rahmen verbundene Bodenplatte;
- Fig. 5: Einen Querschnitt durch eine Schaumstoffschicht mit mehreren Schaumstofflagen;
- Fig. 6: Eine perspektivische Ansicht auf eine Bodenplatte mit Aussparungen und einem Rahmen;
- Fig. 7: Eine perspektivische Ansicht auf eine Frachtpalette mit Frachtcontainern;
- Fig. 8: Eine Explosionsdarstellung hinsichtlich einer vergrößerten Frachtpalette; und
- Fig. 9: Einen Querschnitt durch eine mit einem Rahmen verbundene Bodenplatte.

In der nachfolgenden Beschreibung werden für gleiche und gleich wirkende Teile dieselben Bezugsziffern verwendet.

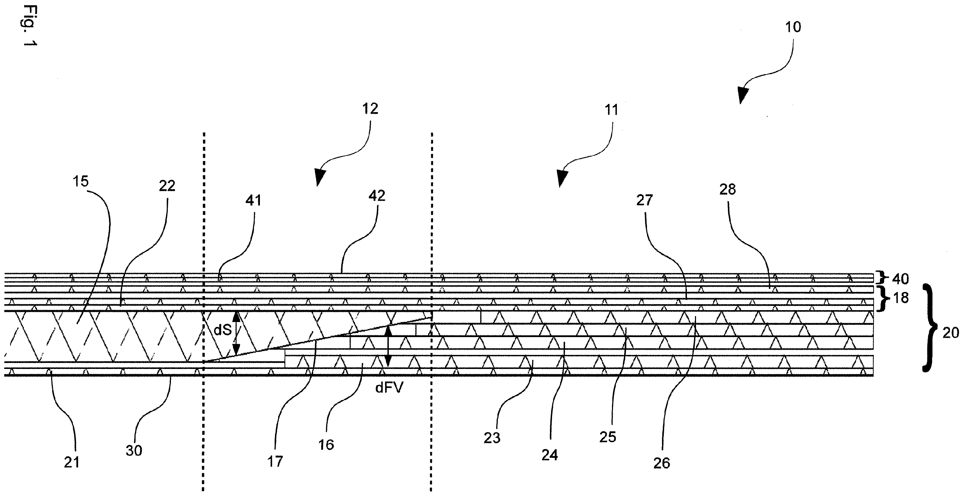

Fig. 1 zeigt in schematischer Darstellung eine erste Ausführungsform einer erfindungsgemäßen Bodenplatte 10 für eine Frachtpalette und/oder einen Frachtcontainer.

Die Bodenplatte 10 umfasst eine Auflageschicht 30 aus einer Metalllegierung, insbesondere aus einer Aluminiumlegierung. Des Weiteren ist ein Hybridkern 20 dargestellt, welcher eine kunstharzdurchsetzte Schaumstoffschicht 15 aufweist, die zwischen einer ersten Kernschicht 21 aus kohlenstofffaserverstärktem Kunststoff und einer zweiten Kernschicht 18 aus kohlenstofffaserverstärktem Kunststoff eingelagert ist.

Der Hybridkern 20 weist, wie gemäß geschweifter Klammer dargestellt, demnach mehrere Schichten, mit mehreren Faserlagen auf, wobei die unterste Schicht der Bodenplatte 10, nämlich die Auflageschicht 30, nicht zum Hybridkern 20 zählt.

Im Querschnitt ist zu erkennen, dass der Hybridkern 20 einen seitlichen schaumstofffreien Randbereich 11 umfasst. Der Randbereich 11 weist vorzugsweise kohlenstofffaserverstärkten Kunststoff auf, wobei die Schaumstoffschicht 15 nicht bis in den Randbereich 11 reicht. Des Weiteren ist ein Übergangsbereich 12 dargestellt, welcher sich an den Randbereich 11 anschließt. Vorzugsweise weist der Hybridkern 20 eine rechteckförmige Grundform auf, so dass der Randbereich 11 vorzugsweise an mehreren Seiten, vorzugsweise an allen vier Seiten, ausgebildet ist. Demnach kann ein vollumfänglicher Randbereich 11 aus faserverstärktem Kunststoff, insbesondere kohlenstofffaserverstärktem Kunststoff, ausgebildet sein, welcher einen äußeren Rahmen bildet.

An diesen äußeren Rahmen, nämlich den schaumstofffreien Randbereich 11 schließt sich vorzugsweise ein Übergangsbereich 12 an. Dieser ist vorzugsweise ebenfalls an allen Randbereichen 11 eines Hybridkerns 20 anliegend ausgebildet, d.h. der Übergangsbereich 12 bildet ebenfalls eine Rahmenform, welche innerhalb des Rahmens des äußeren Randbereichs 11 ausgebildet ist. Der Übergangsbereich 12 weist sowohl die Schaumstoffschicht 15 als auch faserverstärkten Kunststoff 16, insbesondere kohlenstofffaserverstärkten Kunststoff, auf. Die Dicke dS der Schaumstoffschicht 15 nimmt im Übergangsbereich 12 zum schaumstofffreien Randbereich 11 hin kontinuierlich ab. Demnach bildet die Schaumstoffschicht 15 im Übergangsbereich 12 eine Dreiecksform bzw. Rampenform, so dass der Wert der Dicke dS der Schaumstoffschicht 15 in Abhängigkeit des Verlaufs der Hypotenuse 17 kontinuierlich abnimmt. Die Dicke dFV bzw. die Lagenanzahl von Faserlagen (23, 24, 25) des faserverstärkten Kunststoffs 16 nimmt im Übergangsbereich 12 zum seitlichen schaumstofffreien Randbereichs 11 hin schrittweise zu.

Der faserverstärkte Kunststoff 16 des Übergangsbereichs 12 besteht gemäß Ausführungsbeispiel in Fig. 1 aus mehreren Faserlagen, nämlich aus der ersten, zweiten und dritten Randfaserlage (23, 24, 25). Aufgrund der unterschiedlichen Längen der drei Randfaserlagen (23, 24, 25) nimmt die Gesamtdicke dFV des faserverstärkten Kunststoffs 16 im Übergangsbereich 12 schrittweise zu.

Der seitliche schaumstofffreie Randbereich 11 wird im dargestellten Beispiel aus acht Lagen gebildet, welche aus faserverstärktem Kunststoff, nämlich kohlenstofffaserverstärktem Kunststoff, bestehen. Dabei handelt es sich um die erste Kernschicht 21 sowie um die drei Faserlagen (22, 27, 28) der zweiten Kernschicht 18. Außerdem sind im Randbereich 11 vier Randfaserlagen, nämlich die erste (23), zweite (24), dritte (25) und vierte (26) Randfaserlage ausgebildet.

Auf dem Hybridkern 20 ist eine Deckschicht 40, die eine erste Deckschichtlage 41 und eine zweite Deckschichtlage 42 umfasst, vorgesehen. Die erste Deckschichtlage 41 ist auf der der Auflageschicht 30 abgewandten Seite der obersten Faserlage 28 angeordnet, wobei die erste Deckschicht 41 aus glasfaserverstärktem Kunststoff eine erste Faserausrichtung VF1 aufweist und mit der obersten Faserlage 28 bzw. der zweiten Kernschicht 18 durch Stoffschluss beispielsweise mittels Klebstoff (Polyurethan-Klebstoff) verbunden ist.

Die zweite Deckschichtlage 42 ist auf der ersten Deckschichtlage 41 angeordnet und besteht ebenfalls aus glasfaserverstärktem Kunststoff und weist eine zweite Faserausrichtung VF2 auf, wobei sich die erste Faserausrichtung VF1 um beispielsweise 45 Grad von der zweiten Faserausrichtung VF2 unterscheidet.

Aufgrund der Ausbildung eines Übergangsbereichs mit variabler Dicke der Schaumstoffschicht 15 sowie des faserverstärkten Kunststoffs 16, treten bei Verbindung der Bodenplatte 10 mit einem Rahmen (nicht dargestellt) keine Bruchkanten auf, da aufgrund des seitlichen schaumstofffreien Randbereichs 11 und des Übergangsbereichs 12 die auf eine Bodenplatte 10 einwirkenden Kräfte bei Verbindung mit einem Rahmen optimal verteilt werden.

Im Zusammenhang mit der Darstellung in Fig. 1 wird darauf hingewiesen, dass es sich lediglich um eine schematische Explosionsdarstellung einer erfindungsgemäßen Bodenplatte 10 handelt. D. h., dass die dargestellten Freiräume, wie bspw. zwischen der Deckschicht 40 und der Faserlage 28 oder zwischen den Faserlagen 27 und 28, sind tatsächlich bei einer fertig hergestellten Bodenplatte 10 nicht ausgebildet.

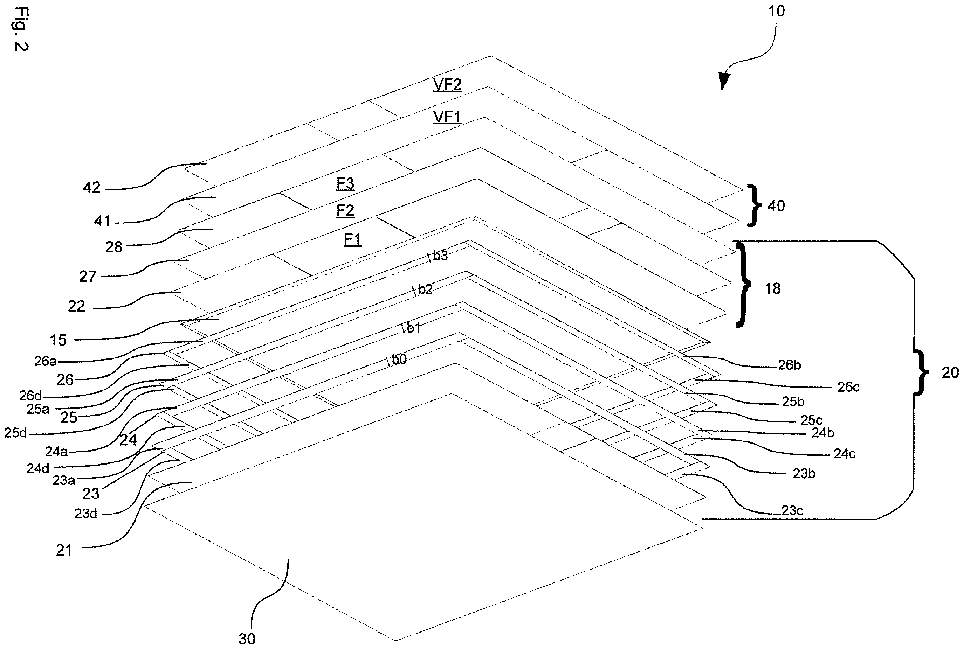

In Fig. 2 sind die einzelnen Kernschichten und Faserlagen der Bodenplatte 10 gemäß Fig. 1 schematisch im nichtverbundenen Zustand dargestellt. Der Hybridkern 20 ist in diesem Beispiel mehrschichtig aufgebaut und über eine nichtdargestellte PU-Kunststoffschicht mit der Auflageschicht 30 verbunden. Der Hybridkern 20 umfasst die kunstharzdurchsetzte Schaumstoffschicht 15, die zwischen einer ersten Kernschicht 21 aus kohlenstofffaserverstärktem Kunststoff und einer zweiten Kernschicht 18 aus kohlenstofffaserverstärktem Kunststoff eingelagert ist.

Der Hybridkern 20 umfasst eine erste Randfaserlage 23 aus kohlenstofffaserverstärkten Kunststoff, wobei die erste Randfaserlage 23 zwischen der ersten Kernschicht 21 und der Schaumstoffschicht 15 eingelagert ist und streifenförmig zumindest abschnittsweise die Randabschnitte der ersten Kernschicht 21 bedeckt. Die streifenförmig ausgebildete erste Randfaserlage 23 bildet mit den vier Faserstreifen 23a, 23b, 23c und 23d einen Rahmen, welcher demnach die Randabschnitte der ersten Kernschicht 21 bedeckt.

Der Hybridkern 20 umfasst des Weiteren eine zweite Randfaserlage 24 aus kohlenstofffaserverstärktem Kunststoff, wobei die zweite Randfaserlage 24 zwischen der ersten Randfaserlage 23 und dem Schaumstoff 15 eingelagert ist und streifenförmig zumindest abschnittsweise die äußeren Randabschnitte der ersten Randfaserlage 23 bedeckt. Demnach bildet die streifenförmige zweite Randfaserlage wiederum mit den vier Faserstreifen 24a, 24b, 24c und 24d einen Rahmen, welcher auf dem Rahmen bzw. die den Rahmen bildenden Faserstreifen der ersten Randfaserlage 23 aufgelegt werden. Die Streifenbreite b1 der zweite Randfaserlage 24 ist geringer als die Streifenbreite b0 der ersten Randfaserlage 23, so dass die erste Randfaserlage 23 ausgehend von der Außenkante der zweiten Randfaserlage 24 lediglich abschnittsweise bedeckt wird.

Der Hybridkern 20 umfasst des Weiteren eine dritte Randfaserlage 25 aus kohlenstofffaserverstärktem Kunststoff, wobei die dritte Randfaserlage 25 zwischen der zweite Randfaserlage 24 und der Schaumstoffschicht 15 eingelagert ist und streifenförmig zumindest abschnittsweise die äußeren Randbereiche der zweite Randfaserlage 24 bedeckt. Die streifenförmig gebildete dritte Randfaserlage 25 bildet somit mit den vier Fasertreifen 25a, 25b, 25c und 25d einen Rahmen, welcher auf die Streifen bzw. den Rahmen der zweiten Randfaserlage 24 aufgelegt wird. Die Streifenbreite b2 der dritten Randfaserlage 25 ist geringer als die Streifenbreite b1 der zweite Randfaserlage 24, so dass die zweite Randfaserlage 24 ausgehend von der Außenkante der zweiten Randfaserlage 24 lediglich abschnittsweise, also nicht vollständig, von der dritten Randfaserlage 25 bedeckt wird.

Der Hybridkern 20 weist des Weiteren eine vierte Randfaserlage 26 aus kohlenstofffaserverstärktem Kunststoff auf, wobei die vierte Randfaserlage 26 zwischen der dritten Randfaserlage 25 und der Schaumstoffschicht 15 eingelagert ist und streifenförmig zumindest abschnittsweise die äußeren Randabschnitte der dritten Randfaserlage 25 bedeckt. Die streifenförmige vierte Randfaserlage 26 bildet mit den vier Faserstreifen 26a, 26b, 26c und 26d demnach einen Rahmen, welcher auf die Streifen bzw. den Rahmen der dritten Randfaserlage 25 aufgelegt wird. Die Streifenbreite b3 der vierten Randfaserlage 26 ist geringer als die Streifenbreite b2 der dritten Randfaserlage 25. Die dritte Randfaserlage 25 bzw. die den Rahmen bildenden Faserstreifen der dritte Randfaserlage 25 werden ausgehend von der Außenkante der dritten Randfaserlage 25 nur teilweise abgedeckt. Die Streifenbreite b3 der vierten Randfaserlage 26 beträgt vorzugsweise einen Wert von 50 mm.

Auf der der Auflageschicht 30 abgewandten Seite der Schaumstoffschicht 15 sind drei Faserlagen (22, 27, 28) aus Kunststoff, insbesondere aus kohlenstofffaserverstärktem Kunststoff, angeordnet, wobei die drei Faserlagen (22, 27, 28) die zweite Kernschicht bilden. Die drei Faserlagen (22, 27, 28) weisen unterschiedliche Faserausrichtungen auf, wobei sich die Faserausrichtung F1 der Faserlage 22 vorzugsweise um mindestens 45 Grad von der zweiten Faserausrichtung F2 der weiteren Faserlage 27 unterscheidet. Die weitere Faserlage 28 weist eine Faserausrichtung F3 auf, wobei die Faserausrichtung F3 mit der Faserausrichtung F1 der Faserlage 22 übereinstimmt und sich somit von der Faserausrichtung F2 der der Faserlage 27 um mindestens 45 Grad unterscheidet.

Die Schaumstoffschicht 15 weist wabenförmige Aussparungen auf, die es ermöglichen, dass das ausgehärtete Kunstharz der kunstharzdurchsetzten Schaumstoffschicht 15 eine unmittelbare Stoffverbindung zwischen der Schaumstoffschicht 15 und der ersten 21 und zweiten Kernschichten 18, insbesondere der Faserlagen 21-28 herstellt. Insofern ist die von den CFK-Lagen 21-28 ummantelte Schaumstoffschicht 15 besonders gut dazu geeignet, vertikale Lasten aufzunehmen, ohne dass es zu einer Kompression des ausgehärteten Hybridkerns 20 kommt. Das ausgehärtete Kunstharz in den Aussparungen der Schaumstoffschicht 15 bildet also eine Stützstruktur.

An der der Auflageschicht 30 abgewandten Seite der Faserlage 28 der zweiten Kernschicht 18 ist eine erste Deckschichtlage 41 angeordnet, welche aus glasfaserverstärktem Kunststoff hergestellt ist und eine erste Faserausrichtung VF1 aufweist. Vorzugsweise ist die Faserlage 28 mit der ersten Deckschichtlage 41 verklebt, insbesondere mit einem Polyurethan-Klebstoff. Auf der ersten Deckschichtlage 41 ist eine zweite Deckschichtlage 42 angeordnet, wobei die zweite Deckschichtlage 42 aus glasfaserverstärktem Kunststoff mit einer zweiten Faserausrichtung VF2 besteht. Die erste Faserausrichtung VF1 unterscheidet sich beispielsweise um 45 Grad von der zweiten Faserausrichtung VF2.

Die GFK- bzw. Deckschichtlagen 41 und 42 werden vorzugsweise im Zuge der Herstellung des Hybridkerns 20 mit diesem, vorzugsweise mittels Polyurethan-Klebstoff, verklebt.

Die Auflageschicht 30 ist im dargestellten Beispiel aus einem 7475 T761-Aluminium-Material hergestellt und weist eine Dicke von 1,6 mm auf. Die aus einer Aluminium-Legierung bestehende Auflageschicht 30 umfasst des Weiteren eine eloxierte, insbesondere eine schwarz eloxierte Schicht, so dass in einem Flugzeugfrachtraum befindliche Brandmelder entsprechend ihrer Funktion verbessert werden. Die Erwärmung in einem Frachtraum ist aufgrund schwarz ausgeführter Oberflächen besser zu detektieren. Die Auflageschicht 30 weist eine Festigkeit von 500-520 N/m² auf.

Die erste CFK- bzw. Kernschicht 21 und die drei Faserlagen 22, 27 und 28 können jeweils beispielsweise eine Dicke von 0,2 bis 1,0 mm, insbesondere 0,44 mm, haben. Die erste GFK- bzw. Deckschichtlage 41 und die zweite GFK- bzw. Deckschichtlage 42 können jeweils eine Dicke von 0,1 mm bis 0,6 mm, insbesondere 0,3 mm, haben.

Die kunstharzdurchsetzte Schaumstoffschicht 15 kann eine Dicke von 3,2 mm bis 3,8 mm, insbesondere von 3,64 mm, haben. Beispielsweise handelt es sich um einen Rohacell-Zellstoff bzw. einen Lantor Soric XF-Stoff, insbesondere XF4-Stoff. Die beschriebene Dicke der Schaumstoffschicht 15 betrifft lediglich den mittleren Bereich des Hybridkerns 20 und nicht die Dicke dS im Übergangsbereich 12.

Die Bodenplatte 10 weist eine Dicke bzw. Gesamtdicke von 7,0 bis 8,0 mm, insbesondere von 7,6 mm, auf.

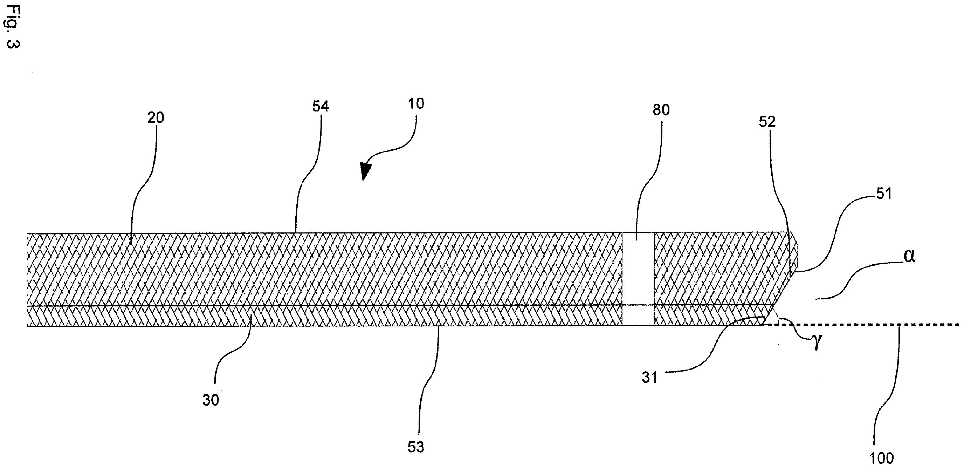

In Fig. 3 ist im Bereich eine fertig hergestellte Bodenplatte 10 dargestellt. Zu erkennen ist der Hybridkern 20 sowie eine Auflageschicht 30. Zur Herstellung des Hybridkerns 20 wird die Schaumstoffschicht 15 zwischen einer ersten Kernschicht 21 sowie zwischen der zweiten Kernschicht 18 eingelagert. Die Schaumstoffschicht ist mit wabenförmigen Ausnehmungen versehen, welche vor der Herstellung des Hybridkerns 20 in die Schaumstoffschicht eingearbeitet werden. Die Schaumstoffschicht 15 ist außerdem kürzer als die erste Kernschicht 21 und die zweite Kernschicht 18 ausgebildet. Auch die streifenförmig ausgebildete erste, zweite, dritte und vierte Randfaserlage (23, 24, 25, 26) wird entsprechend ihrer späteren Positionen angeordnet, so dass der Hybridkern 20 den seitlichen schaumstofffreien Randbereich 11 aus faserverstärktem Kunststoff und den Übergangsbereich 12 umfasst. Die Kernschichten und die kunstharzdurchsetzte Schaumstoffschicht 15 werden beispielsweise bei einer Temperatur von 150°C bis 250°C miteinander verpresst.

Das Verpressen sowie das Erhitzen der Kernschichten bzw. der Faserlagen und Randfaserlagen und der kunstharzdurchsetzten Schaumstoffschicht 15 erfolgt derart, dass das Kunstharz verflüssigt wird und über die wabenförmigen Aussparungen der Schaumstoffschicht 15 in die beiden Kernschichten 18 und 21 bzw. in alle Faserlagen und Randfaserlagen dringt.

Nach Fertigstellung des Hybridkerns 20 kann ein (nicht dargestelltes) Abreißgewebe, welches auf einer mit der Auflageschicht zu verbindenden Seite der ersten Kernschicht 21 aufgebracht ist, abgerissen werden, so dass die zu verbindende Seite der ersten Kernschicht 21 aufgeraut wird und uneben ist.

Des Weiteren wird die Auflageschicht 30 aus einer Aluminiumlegierung hergestellt und vorzugsweise schwarz eloxiert bzw. anodisiert.

Das Verbinden der Auflageschicht 30 mit dem Hybridkern 20 erfolgt durch Stoffschluss, nämlich durch Verklebung, vorzugsweise mit einem Polyurethan-Klebstoff. Hierzu wird mit einem Zahnspachtel beispielsweise eine PU-Klebstoffschicht von 1 mm auf mindestens einer der zu verbindenden Seiten aufgetragen, so dass nach dem Verkleben der Auflageschicht 30 mit dem Hybridkern 20 eine Enddicke des PU-Klebers von 0,5 mm vorliegt.

Die Kanten 31 der Auflageschicht 30 werden vorzugsweise vor der Verbindung mit dem Hybridkern 20 angeschrägt derart, dass die Kanten bzw. Außenkanten 31 in Relation zu einer Bodenauflagefläche 100 einen Winkel γ von vorzugsweise 45 Grad einschließen. Der Hybridkern 20 bzw. die Bodenplatte 10 weist ebenfalls angeschrägte Seiten 51, welche eine schräge Außenkante 52 bilden, auf, wobei die Außenkante 52 in Relation zu einer Bodenauflagefläche 100 einen Winkel α von insbesondere 45 Grad einschließt. Demnach weisen die Winkel γ und α übereinstimmende Werte auf, so dass eine ebene Außenkante der Bodenplatte 10 gebildet wird.

Als Bodenauflagefläche 100 wird eine ebene Fläche verstanden, auf welcher die Unterseite 53 der Bodenplatte 10, also die Unterseite der Auflagefläche 30 aufliegt bzw. die Bodenplatte 10 abgestellt wird.

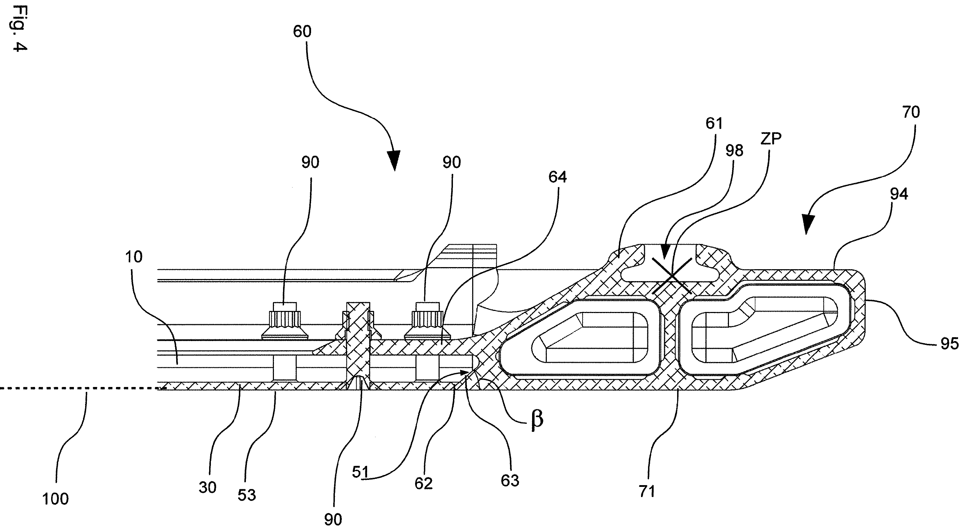

Des Weiteren ist in Fig. 3 eine Bohrung 80 zu erkennen, welche zur Verbindung der Bodenplatte 10 mit einem Rahmenprofil 61 mit Hilfe einer Schraube 90 benötigt wird (siehe Fig. 4).

In Fig. 4 wird ein Teilbereich eines Bodenelementes 60 dargestellt. Ein Bodenelement 60 umfasst eine Bodenplatte 10 sowie einen Rahmen 70. Der Rahmen 70 weist vier Hohlprofile 61, welche als Doppelhohlprofile ausgebildet sind, und vier nichtdargestellte Eckprofile auf. Die maximale Höhe der Hohlprofile 61 beträgt insbesondere 22,0 bis 26,0 mm. Der Rahmen 70 bzw. die Hohlprofile 61 weisen angeschrägte Auflagenseiten 62 auf, welche eine schräge Innenkante 63 bilden, wobei die Innenkanten 63 in Relation zu einer Bodenauflagefläche 100 einen Winkel β von insbesondere 45 Grad einschließen. Die angeschrägten Seiten 51 einer Bodenplatte 10 liegen auf den angeschrägten Auflageseiten 62 des Rahmens 70 an, derart, dass die Unterseite 53 der Bodenplatte 10 bündig an dem Rahmen 70 anliegt. In anderen Worten bilden die Unterseite 53 der Bodenplatte und die Unterseite 71 des Rahmens 70 bzw. des Hohlprofils 61 eine plane Fläche. Die Kanten der jeweiligen Unterseiten 53 und 71 sind demnach auf Stoß zueinander angeordnet.

Der Rahmen 70, insbesondere das Hohlprofil 61, weist des Weiteren einen Flansch 64 auf, welcher mit der angeschrägten Auflageseite 62 einen Eingriffsabschnitt zur Verbindung des Rahmens 70 bzw. des Hohlprofils 61 mit der Bodenplatte 10 bildet, wobei der Flansch 64 mindestens abschnittsweise auf der Bodenplatte 10, insbesondere auf der Oberseite 54 der Bodenplatte 10, aufliegt. Der Überlappungsbereich des Flansches 64 mit der Bodenplatte 10 beträgt insbesondere 32,0 mm bis 38,0 mm.

Das Bodenelement 60 wird gemäß eines erfindungsgemäßen Verfahrens hergestellt, wobei die Bodenplatte 10 zumindest mit dem Randbereich 11 und insbesondere zusätzlich mit dem Übergangsbereich 12 mit den Hohlprofilen 61 verbunden wird, wobei das Verbinden der Hohlprofile 61 mit der Bodenplatte 10 zunächst durch Einschub der Bodenplatte 10 in den Eingriffsabschnitt des Hohlprofils 61 erfolgt. In einem zweiten Schritt werden die Hohlprofile 61 mit der Bodenplatte 10 mittels Schrauben 90 verschraubt.

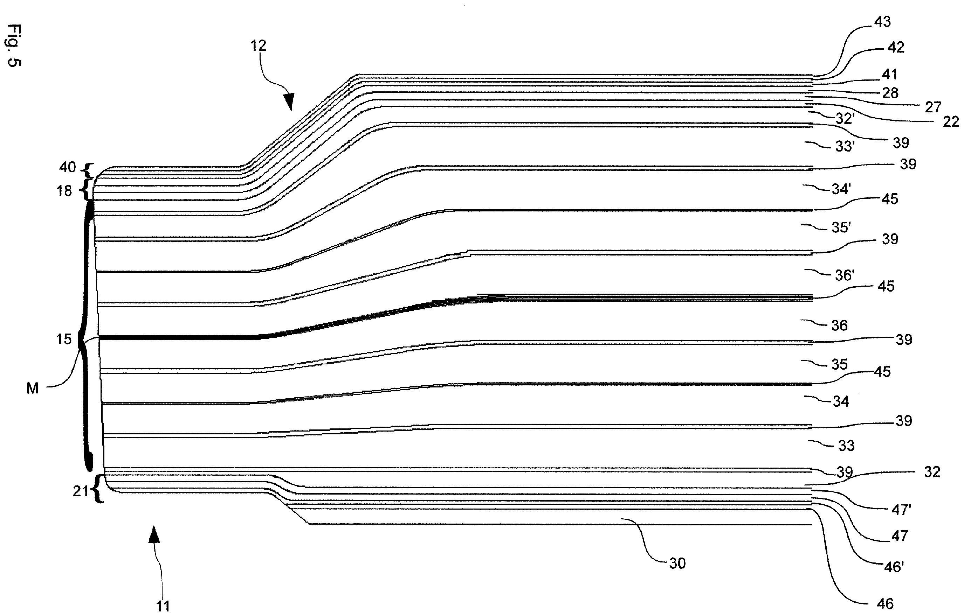

In Fig. 5 wird eine Schaumstoffschicht 15 im Querschnitt dargestellt, wobei diese Schaumstoffschicht 15 mehrere Schaumstofflagen (32, 32', 33, 33', 34, 34', 35, 35', 36, 36') umfasst. Die Schaumstofflagen (32, 32', 33, 33', 34, 34', 35, 35', 36, 36') können beispielsweise 3DICore-Schaumstofflagen sein.

Die Schaumstofflagen (32, 32', 33, 33', 34, 34', 35, 35', 36, 36') weisen unterschiedliche Dicken auf, wobei die Schaumstofflagen (32, 32', 33, 33', 34, 34', 35, 35', 36, 36') derart zueinander angeordnet sind, dass die Dicken zur Schaumstoffschichtmitte M hin zunehmen. Die Schaumstoffschichtmitte M wird im dargestellten Beispiel von der mittlersten Lage der Schaumstoffschicht, nämlich eine Harzlage 45 gebildet. Die mittlerste Harzlage bzw. Epoxyschicht 45 ist vorzugsweise mehrmals, insbesondere vierfach, aufgetragen. Mit anderen Worten nehmen die Dicken der Schaumstofflagen (32, 32', 33, 33', 34, 34', 35, 35', 36, 36') ausgehend von der Harzlage 45 zu beiden Seiten nach außen hin ab.

Die Schaumstofflagen (32, 32', 33, 33', 34, 34', 35, 35', 36, 36') sind des Weiteren symmetrisch zueinander angeordnet. Zu in der Schaumstoffschicht mittig angeordnete Harzlage 45 sind beidseitig Schaumstofflagen (33, 33', 34, 34', 35, 35', 36, 36') mit einer ersten Dicke angeordnet bzw. platziert, wobei diese Schaumstofflagen (33, 33', 34, 34', 35, 35', 36, 36') beispielsweise XF5-Schaumstofflagen sind. Die zweiten Dicken der darauf folgenden Schaumstofflagen (32, 32') sind geringer als die ersten Dicken der weiter Innen angeordneten Schaumstofflagen (33, 33', 34, 34', 35, 35', 36, 36'). Die Dicken der äußeren Schaumstofflagen (32, 32') sind am geringsten. Bei den äußersten Schaumstofflagen (32, 32') kann es sich beispielsweise um XF2-Schaumstofflagen handeln.

Die Schaumstofflagen (32, 32', 33, 33', 34, 34', 35, 35', 36, 36') der Schaumstoffschicht 15 sind durch Stoffschluss miteinander verbunden.

Zwischen einzelnen Schaumstofflagen sind Lagen aus faserverstärktem Kunststoff 39, insbesondere aus kohlenstofffaserverstärktem Kunststoff, eingelagert. Beispielsweise ist eine derartige Lage 39 zwischen den Schaumstofflagen 36 und 35 bzw. 36' und 35' und zwischen den Schaumstofflagen 34 und 33 bzw. 34' und 33' und zwischen den Schaumstofflagen 33 und 32 bzw. 33' und 32' zu erkennen.

Mit Hilfe einer derart gebildeten Schaumstoffschicht 15 wird eine Stützstruktur zur Verfügung gestellt, die eine besonders hohe Druckfestigkeit aufweist. Bei der Ausbildung einer derartigen Schaumstoffschicht 15 kann das Verbinden der einzelnen Schaumstofflagen (32, 32', 33, 33', 34, 34', 35, 35', 36, 36') und der Lagen aus faserverstärktem Kunststoff 39 durch Stoffschluss erfolgen.

Vorzugsweise sind die Schaumstofflagen (32, 32', 33, 33', 34, 34', 35, 35', 36, 36') und die dazwischen eingelegten bzw. angeordneten Lagen 39 aus faserverstärktem Kunststoff durch den Auftrag und das Aushärten eines Kunstharzes miteinander verbunden. Der Kunstharz 45 ist zwischen einzelnen Schaumstofflagen (32, 32', 33, 33', 34, 34', 35, 35', 36, 36') eingelagert.

Beispielweise ist die Schaumstoffschichtmitte M eine Kunstharzlage 45. Außerdem ist zwischen den Schaumstofflagen 35 und 34 bzw. 35' und 34' eine Kunstharzlage 45 eingebettet. Aufgrund der ursprünglichen Ausbildung der Schaumstoffschichten (32, 32', 33, 33', 34, 34', 35, 35', 36, 36') mit wabenförmigen Aussparungen, werden diese Aussparungen beim Stoffschluss mit Kunstharz gefüllt, sodass der Kunstharz in diesen Aussparungen trocknet und Stege aus Kunstharz entstehen.

Der Anteil der Harzfüllung in der dargestellten Schaumstoffschicht 15 beträgt etwa 4 %. Die Schaumstoffschicht 15 ist demnach relativ leicht, kann jedoch sehr hohen Druckbelastungen Stand halten. Durch das Einbringen zusätzlicher Lagen 39 aus faserverstärktem Kunststoff können auf eine Bodenplatte 10 wirkende punktuelle Belastungen gleichmäßiger in der Schaumstoffschicht 15 verteilt werden.

Die erste Kernschicht 21 ist aus vier Faserlagen, nämlich den Faserlagen 46, 46', 47 und 47'. Bei den äußeren Faserlagen 46 und 46' handelt es sich vorzugsweise um GFK-Lagen. Die Faserlagen 47 und 47' sind hingegen CFK-Lagen.

Die zweite Kernschicht 18 ist im Ausführungsbeispiel gemäß Fig. 5 aus drei Faserlagen, nämlich den Faserlagen 22, 27 und 28. Bei diesen Faserlagen 22, 27 und 28 handelt es sich um im dargestellten Beispiel um CFK-Lagen. Die Deckschicht 40 umfasst eine erste Deckschichtlage 41, eine zweite Deckschichtlage 42 sowie eine dritte Deckschichtlage 43. Bei den drei Deckschichtlagen 41, 42 und 43 handelt es sich um GFK-Lagen. Die Auflageschicht 30 ist im dargestellten Beispiel aus Aluminium gebildet.

Die Dicke dS der Schaumstoffschicht 15 nimmt im dargestellten Übergangsbereich 12 zu dem Randbereich 11 hin ab. Der Randbereich 11 weist insgesamt eine geringere Dicke als der Übergangsbereich 12 auf.
In einer weiteren Ausführungsform der Erfindung ist es möglich, dass die Schaumstoffschicht 15 aus fünf Schaumstofflagen gebildet ist. Zwei mittig ausgebildete Schaumstofflagen können beispielsweise eine Dicke von jeweils 17 mm aufweisen. Unterhalb der beiden mittigen Schaumstofflagen, also in Richtung der Auflageschicht 30, ist vorzugsweise eine Schaumstofflage mit einer Dicke von beispielsweise 6 mm ausgebildet. Oberhalb der beiden mittigen Schaumstofflagen, also in Richtung der Decklage 40, können zwei weitere Schaumstofflagen ausgebildet sein, die jeweils eine Dicke von 6 mm aufweisen.

Ausgehend von der Deckschicht bis zur Auflageschicht können folgende Schichten/Lagen mit den angegebenen Dicken ausgebildet sein:
- GFK-Lage in 0/90; 0,49 mm (Deckschicht)
- CFK-Lage in +/- 45; 0,64 mm
- CFK-Lage in 0/90; 0,66 mm
- Schaumstofflage; 6,0 mm
- CFK-Lage in 0/90; 0,4 mm
- Schaumstofflage; 6,0 mm
- CFK-Lage in 0/90; 0,4 mm
- Schaumstofflage; 17,0 mm
- CFK-Lage in 0/90; 0,4 mm
- Schaumstofflage; 17,0 mm
- CFK-Lage in 0/90; 0,4 mm
- Schaumstofflage; 6 mm
- CFK-Lage in 0/90; 0,66 mm
- CFK-Lage in +/- 45; 0,64 mm
- GFK-Lage in 0/90; 0,49 mm
- Aluminiumlage; 3,2 mm (Auflageschicht)

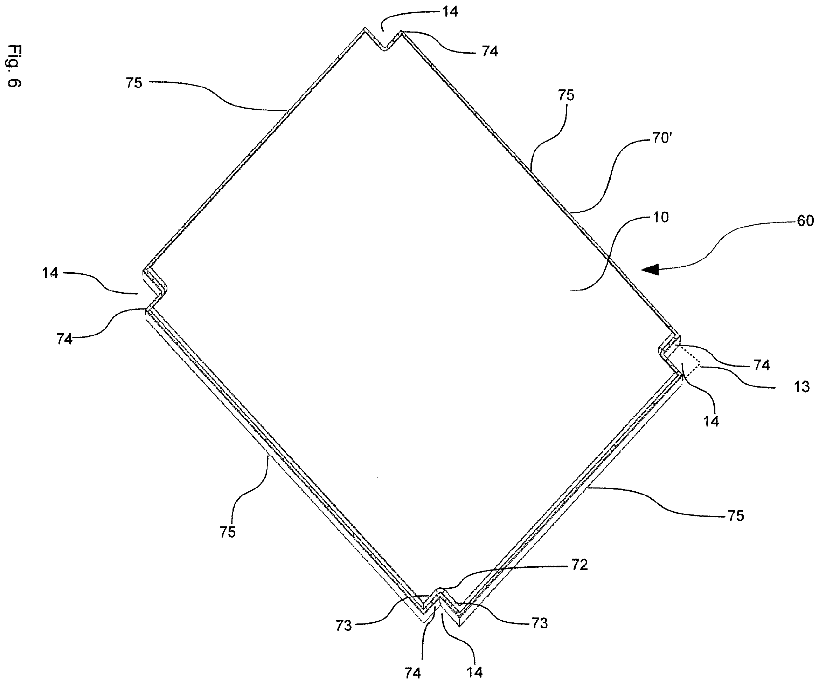

In Fig. 6 wird eine Bodenplatte 10 dargestellt, die mit Rahmenelementen versehen ist. Die Bodenplatte 10 weist im Wesentlichen eine rechteckige Grundform auf, wobei in die theoretisch vorhandenen Ecken 13 der Bodenplatte 10 Aussparungen 14 eingearbeitet sind. Die dargestellten Aussparungen 14 weisen einen rechteckförmigen Umfang auf, wobei mindestens die Innen liegende Ecke 72 der Aussparung 14 abgerundet ausgebildet ist. Im dargestellten Beispiel werden demnach die Ecken 13 einer rechteckigen Bodenplatte 10 durch Aussparungen 14 mit rechteckförmigen Umfang ersetzt, wobei die Aussparung 14 derart ausgebildet ist, dass der Eckbereich 13 der Bodenplatte 10 durch zwei senkrecht zu den jeweiligen Außenkanten angeordnete Aussparungskanten 73 gebildet ist.

Die Aussparungen 14 dienen zur Verbindung mit Eckprofilen 74 um ein Bodenelement bzw. eine Frachtpalette zu bilden. Die vier dargestellten Eckprofile 74 bilden mit vier Längsprofilen 75 einen abschlussleistenartigen Rahmen 70'. Das dargestellte Bodenelement 60 umfasst demnach eine Bodenplatte 10 mit Aussparungen 14 und einen aus Eckprofilen 74 und Längsprofilen 75 gebildeten Rahmen 70'.

Der dargestellte abschlussleistenartige Rahmen 70' kann auch als Abschlussleiste der Bodenplatte 10 bezeichnet werden. Die Eckprofile 74 und/oder die Längsprofile 75 können als Vierkantprofile ausgebildet sein. Es ist möglich, dass einzelne Eckprofile 74 mit dazwischen befindlichen Längsprofilen 75 einstückig ausgebildet sind. Auch das Verbinden einzelner Eckprofile 74 mit dazwischen befindlichen Längsprofilen mittels Schweißen und/oder Clinchen und/oder Vernieten und/oder Verschrauben und/oder Verbolzen und/oder Verkleben ist möglich. In einer weiteren Ausführungsform der Erfindung können die Eckprofile 74 und/oder die Längsprofile 75 auf die Bodenplatte 10 aufgeschoben werden. Es ist möglich, dass die Eckprofile 74 und/oder die Längsprofile 75 im auf die Bodenplatte 10 aufgeschobenen Zustand mit der Bodenplatte 10 verbunden werden. Dieses Verbinden ist beispielsweise mittels Schweißen und/oder Clinchen und/oder Vernieten und/oder Verschrauben und/oder Verbolzen und/oder Verkleben möglich.

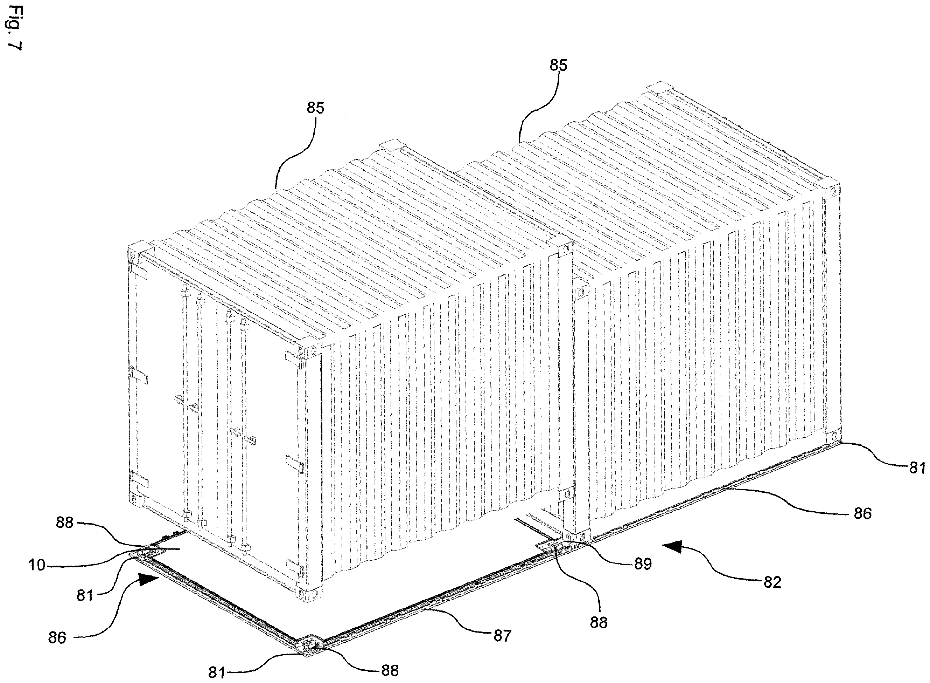

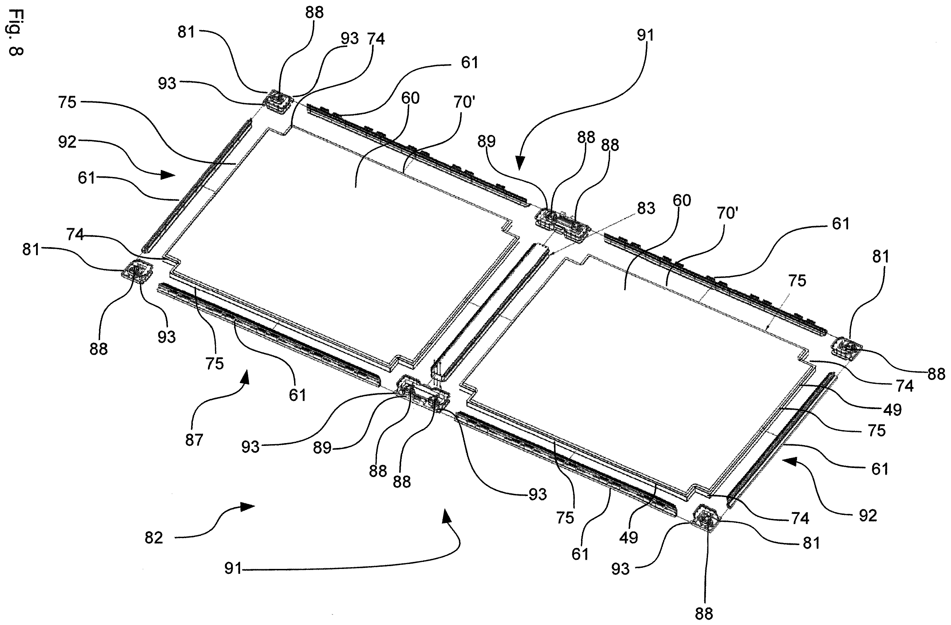

Das in Fig. 6 dargestellte Bodenelement 60 wird in Fig. 7 als Teil einer Frachtpalette 86 dargestellt. Das Bodenelement 60 ist hierzu mit einem Außenrahmen 87 versehen. Bei dem dargestellten Außenrahmen 87 kann es sich beispielsweise um den in Fig. 4 dargestellten Rahmen 70 handeln. Dieser kann unmittelbar mit der Bodenplatte 10 oder mittelbar über einen abschlussleistenartigen Rahmen 70' mit der Bodenplatte 10 verbunden sein (siehe hierzu auch Fig. 8). Außerdem sind Verrastungselemente 88 zu erkennen, welche zur Befestigung eines Containers 85 dienen. Die Verrastungselemente 88 sind dabei im Bereich der Aussparungen 14 der Bodenplatte 10 angeordnet. Mit Hilfe einer zusätzlichen Verbindungsplatte 89 können zwei Frachtpaletten 86 miteinander verbunden werden. Die Verbindungsplatte 89 weist zwei Verrastungselemente 88 auf. Demnach ist es möglich je nach Anwendungsfall aus zwei Bodenelementen 60 eine vergrößerte Frachtpalette 82 zu bilden, welche zwei Bodenelemente 60 bzw. zwei Bodenplatten 10 umfasst. Vier Verrastungselemente 88 sind auf Außen-Eckprofilen 81 ausgebildet. Die in den Ecken der vergrößerten Frachtpalette 82 befindliche Außen-Eckprofile 81 bilden die Palettenecken der vergrößerten Frachtpalette 82.

Bei den dargestellten Containern 85 handelt es sich um ISO668 Typ 1 D Container, die auf einer vergrößerten Frachtpalette 82 transportiert werden, wobei die Frachtpalette 82 aus zwei miteinander verbundenen Bodenelementen 60 bzw. aus zwei einzelnen Frachtpaletten 86 gebildet ist. Folglich ist es auch möglich, auf der dargestellten Frachtpalette einen ISO668 Typ 1 CC Container zu transportieren.

Mit Hilfe mehrerer, insbesondere gleichartig ausgebildeter Bodenplatten 10 und/oder Bodenelementen 60 können demnach modulartig variable Frachtpalettengrößen zur Verfügung gestellt werden, wobei die Frachtpalettengrößen an die zu transportierenden Güter bzw. an zu transportierende Frachtcontainer 85 angepasst werden können. Demnach ist es beispielsweise möglich einen 10ft-Container mit einer Frachtpalette 86 aus einer Bodenplatte 10 bzw. einem Bodenelement 60 zu transportieren. Zum Transport eines 20ft-Containers kann eine Frachtpalette 82 durch Verbindung von zwei Bodenplatten 10 bzw. zwei Bodenelementen 60 gebildet werden.

Fig. 8 zeigt in einer Explosionsdarstellung den Aufbau einer vergrößerten Frachtpalette 82 ohne die darauf befestigten Container 85. Zwei Bodenelemente 60_{L} und 60_{R} sind jeweils mit einem abschlussleistenartigen Rahmen 70' ausgebildet. Die Ausführung des abschlussleistenartigen Rahmens 70' kann beispielweise der in Fig. 6 dargestellten Ausführungsform entsprechen.

Um die beiden Bodenelemente 60_{L} und 60_{R} ist ein gemeinsamer Außenrahmen 87 gebildet. Dieser gemeinsame Außenrahmen 87 umfasst vier Außen-Eckprofile 81 auf denen jeweils ein Verrastungselement 88 ausgebildet ist. Des Weiteren sind zwei Verbindungsplatten 89 ausgebildet, auf denen jeweils zwei Verrastungselemente 88 ausgebildet sind. Zwischen den Bodenelementen 60_{L} und 60_{R} ist ein Verbindungssteg 83 ausgebildet. Der Verbindungssteg 83 ist an den langen Seitenkanten einmal auf das linke Bodenelement 60_{L} und einmal auf das rechte Bodenelement 60_{R} aufgeschoben. Mit den Verbindungsplatten 89 ist der Verbindungssteg 83 an dessen kurzen Längskanten vorzugsweise jeweils verschraubt.

Die Außen-Eckprofile 81 sind mittelbar über zwei Eckprofile 74 mit den Bodenplatten 10 verbunden. Die Außen-Eckprofile 81 sind vorzugsweise auf die Eckprofile 74 aufgeschoben und/oder mit der jeweiligen Bodenplatte 10 und/oder dem jeweiligen Eckprofil 74 verschraubt.

Die beiden Längskanten 91 des Außenrahmens 87 werden durch zwei Rahmenelemente, die beispielsweise als Hohlprofile 61 ausgebildet sind (wie beispielsweise in Fig. 4 dargestellt), gebildet, wobei diese beiden Rahmenelemente über jeweils eine Verbindungsplatte 89 miteinander verbunden sind. Die Verbindung der Hohlprofile 61 mit den Verbindungsplatten 89 kann beispielsweise über Zapfen 93 erfolgen. Die Seitenkanten 92 des Außenrahmens 87 können ebenfalls als Hohlprofile 61 (wie beispielsweise in Fig. 4 dargestellt) gebildet sein. Diese Hohlprofile 61 sind jeweils mit zwei Außen-Eckprofilen 81 verbunden. Die Außen-Eckprofile 81 können hierzu ebenfalls mindestens zwei Zapfen 93 aufweisen.

Zusammenfassend können zur Herstellung einer vergrößerten Frachtpalette 82 zwei Bodenelemente 60_{L} und 60_{R}, die jeweils einen abschlussleistenartigen Rahmen 70' aufweisen, mit vier Außen-Eckprofilen 81, einem Verbindungssteg 83, zwei Verbindungsplatten 89 und sechs Hohlprofilen 61 zusammengesteckt bzw. verklemmt werden. Anschließend können einzelne Elemente der vergrößerten Frachtpalette 82 verschraubt und/oder verklebt und/oder verschweißt und/oder vercrimpt werden.

Der in Fig. 8 dargestellte abschlussleistenartige Rahmen 70' kann aus Innenhohlprofilen 48 gebildet sein, wobei die Außenseiten 49 der Innenhohlprofile 48 sichtbar sind.

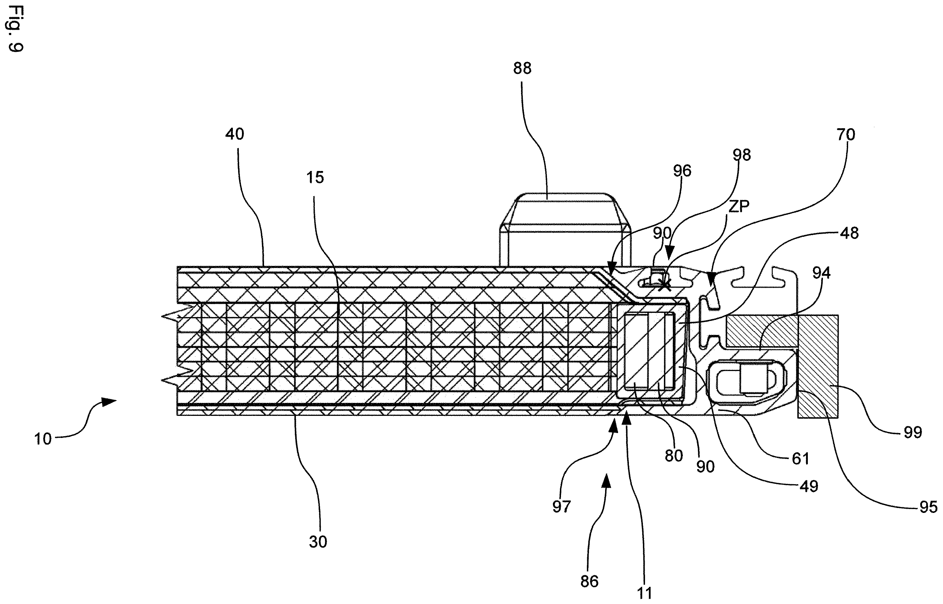

In Fig. 9 ist schematisch eine Bodenplatte 10 dargestellt, die mit einem Rahmen 70 verbunden ist. Bei dem dargestellten Hohlprofil 61 des Rahmens 70 handelt es sich um ein einfaches Hohlprofil. Die Bodenplatte 10 umfasst im dargestellten Beispiel im Randbereich 11 ein Innenhohlprofil 48. Das Innenhohlprofil 48 ist vorzugsweise an allen vier Seiten der Bodenplatte 10 ausgebildet. Mit anderen Worten ist das Innenhohlprofil 48 vollinnenumfänglich ausgebildet. Im dargestellten Querschnitt durch die Bodenplatte 10, weist das Innenhohlprofil 48 einen im Wesentlichen rechteckigen Querschnitt auf.

Das Innenhohlprofil 48 ist zumindest von einer Lage der Deckschicht 40 und der Auflageschicht 30 von oben und von unten abgedeckt. Die Außenseite 49 des Innenhohlprofils 48 kann beispielsweise einen Teilabschnitt der Außenseite der Bodenplatte 10 bilden. Das Innenhohlprofil 48 kann beispielsweise aus Aluminium oder einer Aluminiumlegierung gebildet sein.

In einer Ausführungsform der Erfindung ist das Innenhohlprofil 48 als Teilabschnitt des abschlussleistenartigen Rahmens 70' des zu bildenden Bodenelements 60 ausgebildet. In einer besonders bevorzugten Ausführungsform der Erfindung ist der gesamte abschlussleistenartige Rahmen 70' eines Bodenelements 60 als Innenhohlprofil 48 ausgebildet, wobei sowohl die Eckprofile 74 als auch die Längsprofile 75 als Innenhohlprofile 48 ausgebildet sind. Die Verbindung der Eckprofile 74 und der Längsprofile 75 mit den einzelnen Lagen der Bodenplatte 10 erfolgt bereits bei der Herstellung der Bodenplatte 10, da die Eck- und Längsprofile (74; 75) gemäß dieser Ausführungsform zwischen einzelnen Lagen der Bodenplatte 10 im Randbereich 11 eingelagert sind. In einer weiteren Ausführungsform der Erfindung ist es möglich, dass die Eck- und Längsprofile (74; 75) zumindest abschnittsweise auch im Übergangsbereich 12 der Bodenplatte 10 ausgebildet sind.

Die Ausbildung eines Innenhohlprofils 48 ist sowohl im Zusammenhang mit einer Bodenplatte gemäß Ausführungsform nach Fig. 1 als auch im Zusammenhang mit einer Bodenplatte gemäß einer der in Fig. 2 oder 5 dargestellten Ausführungsformen möglich.

Die Ausbildung eines Innenhohlprofils 48 dient dazu, mindestens eine Bohrung 80 für mindestens eine einzuführende Schraube 90 zu bilden. Mit Hilfe der Schraube 90 wird die Bodenplatte 10 mit dem Rahmen 70, insbesondere mit dem Hohlprofil 61 des Rahmens 70, verbunden.

Die Fig. 9 zeigt schematisch einen Riegel 99, nämlich einen Y-Riegel 99, der insbesondere zur Befestigung der Frachtpalette 86 in einem Frachtraum eines Flugzeuges dient. Der Riegel 99 liegt zur Aufnahme von Z-Kräften auf dem Rahmen 70, insbesondere auf der Auflagefläche 94 des Rahmens 70, auf.

Zum Verzurren von Frachtgütern auf der Frachtpalette 86 weist der Rahmen 70 eine Loch- oder Sitzschiene 98 auf. Diese Loch- oder Sitzschiene 98 ist im mit der Bodenplatte 10 verbundenen Zustand oberhalb des Innenhohlprofils 48 ausgebildet. Die Loch- oder Sitzschiene 98 ist im dargestellten Beispiel in vertikaler Verlängerung zum Innenhohlprofil 48 ausgebildet. Bei dem äußersten Rand der Bodenplatte 10 handelt es sich um die Außenseite 49 des Innenhohlprofils 48. Es ist zu erkennen, dass der rechte seitliche Abschnitt der Loch- oder Sitzschiene 98 in horizontaler Richtung geringfügig über die Außenseite 49 des Innenhohlprofils 48 hinaussteht. Beim Einführen eines Zurrhakens oder Zurrrings (nicht dargestellt) in die Loch- oder Sitzschiene 98 und bei entsprechendem Verzurren des Frachtgutes, wirkt die Verzurrlast modellhaft auf einen Zurrpunkt ZP innerhalb der Loch- oder Sitzschiene 98. Die Verzurrkräfte, die in den Zurrpunkt ZP eingeleitet werden, werden auf die Schraube 90 übertragen bzw. auf die Schraube 90 eingeleitet. Aufgrund dieser Ausführungsform wirken Hebelkräfte in der Verbindung zwischen Frachtsystem-Vertikal-Verriegelungsnasen zum Einleitungspunkt der Verzurrgurte relativ kurzhebelig und direkt.

Alternativ ist die Loch- oder Sitzschiene 98 möglichst nah am äußeren Rand, insbesondere möglichst nah an der Außenkante 95 des Rahmens 70, ausgebildet (siehe hierzu Fig. 4).

Wegen der dargestellten Anordnung der Loch- oder Sitzschiene 98 bzw. wegen der modellhaften Ausführung des Zurrpunktes ZP können die Verzurrlasten der Fracht möglichst direkt in vertikale Verriegelungsnasen des Frachtsystems eingeleitet werden. Durch diese "kurzhebelige" Bauart ist es möglich, Gewicht bzgl. der zu konstruierenden Frachtpalette 86 und/oder des Rahmens 70 einzusparen.

Die Loch- oder Sitzschiene 98 bzw. der modellhafte Zurrpunkt ZP ist vorzugsweise möglichst nahe an der Außenkante 95 des Rahmens 70 ausgebildet. Die Auflagefläche 94 des Rahmens 71, die als Angriffsfläche für den Riegel 99 dient, ist möglichst nahe an der Loch- oder Sitzschiene 98 ausgebildet. Der horizontale Abstand zwischen der Loch- oder Sitzschiene 98 und der Außenkante 95 des Rahmens 70 beträgt vorzugsweise maximal 10 cm, insbesondere maximal 7 cm. Mit anderen Worten beträgt der horizontale Abstand zwischen dem modellhaften Zurrpunkt ZP und der Außenkante 95 des Rahmens 70 vorzugsweise maximal 10 cm, insbesondere maximal 7 cm.

Aufgrund des gewählten horizontalen Abstands, können die Verzurrkräfte in idealer Art und Weise weitergeleitet bzw. verteilt werden.

Die Erläuterungen hinsichtlich der Loch- oder Sitzschiene 98 und/oder hinsichtlich des Zurrpunktes ZP und/oder hinsichtlich des Abstandes zwischen der Loch- oder Sitzschiene 98 bzw. des modellhaften Zurrpunktes ZP und der Außenkante 95 des Rahmens 70 gelten auch losgelöst von der dargestellten Ausführungsform gemäß Fig. 9.

Die Bodenplatte 10 weist schräge Außenkante 52 auf, die sowohl oberhalb des Innenhohlprofils 49, als auch unterhalb des Innenhohlprofils 49 ausgebildet sind. Der Rahmen 70 weist hierzu komplementäre schräge Innenkanten 61 auf. Es werden ein schräger oberer Rahmenkontaktbereich 96 und ein schräger unterer Rahmenkontaktbereich 97 gebildet. Die schräge Außenkante 52 der Bodenplatte 10 und die schrägen Innenkanten 61 des Rahmens 70 liegen bündig aneinander an. Aufgrund der Verbindung des Rahmens 70 durch Schrauben 90 mit der Bodenplatte 10 wird ein äußerst stabiles Bodenelement 60 bzw. eine äußerst robuste Palette 86 gebildet. Die Kräfte können aufgrund des passgenauen oberen Rahmenkontaktbereichs 96 und des passgenauen unteren Rahmenkontaktbereichs 97 seitlich übertragen werden. Die mögliche Ausbildung eines oberen Rahmenkontaktbereichs 96 und eines unteren Rahmenkontaktbereichs 97 führt dazu, dass das Rahmenteil seitlich auf die Bodenplatte 10 aufgeschoben werden kann. Das Rahmenteil bzw. der Rahmen 70 umklammert die Bodenplatte 10 seitlich. Hierzu weist der Rahmen 70 bzw. das Rahmenteil ein U-förmiges Profil auf. Die endgültige Befestigung des Rahmens 70 an der Bodenplatte 10 erfolgt mittels Schrauben 90. Die Erläuterungen hinsichtlich der Rahmenkontaktbereiche und/oder der Umklammerung und/oder der Passgenauigkeit gelten auch losgelöst von der dargestellten Ausführungsform gemäß Fig. 9.

### Bezugszeichenliste

- 10: Bodenplatte
- 11: Randbereich
- 12: Übergangsbereich
- 13: Ecke
- 14: Aussparung
- 15: Schaumstoffschicht
- 16: Faserverstärkter Kunststoff
- 17: Hypotenuse
- 18: Zweite Kernschicht
- 20: Hybridkern
- 21: Erste Kernschicht
- 22: Faserlage
- 23: Erste Randfaserlage
- 23a,b,c,d: Faserstreifen der ersten Randfaserlage
- 24: Zweite Randfaserlage
- 24 a,b,c,d: Faserstreifen der zweiten Randfaserlage
- 25: Dritte Randfaserlage
- 25 a,b,c,d: Faserstreifen der dritten Randfaserlage
- 26: Vierte Randfaserlage
- 26 a,b,c,d: Faserstreifen der vierten Randfaserlage
- 27: Faserlage
- 28: Faserlage
- 30: Auflageschicht
- 31: Kante Auflageschicht
- 32, 32': Schaumstofflagen
- 33, 33': Schaumstofflagen
- 34, 34': Schaumstofflagen
- 35, 35': Schaumstofflagen
- 36, 36': Schaumstofflagen
- 39: Lage aus faserverstärktem Kunststoff
- 40: Deckschicht
- 41: Erste Deckschichtlage
- 42: Zweite Deckschichtlage
- 43: Dritte Deckschichtlage
- 45: Harzlage
- 46, 46': Faserlage
- 47, 47': Faserlage
- 48: Innenhohlprofil
- 49: Außenseite Innenhohlprofil
- 51: Angeschrägte Seiten
- 52: Außenkante Bodenplatte
- 53: Unterseite Bodenplatte
- 54: Oberseite Bodenplatte
- 60, 60_{L}, 60_{R}: Bodenelement
- 61: Hohlprofil
- 62: Angeschrägte Auflageseite
- 63: Innenkante
- 64: Flansch
- 70, 70': Rahmen
- 71: Unterseite Hohlprofil
- 72: Ecke Aussparung
- 73: Aussparungskante
- 74: Eckprofil
- 75: Längsprofil
- 80: Bohrung
- 81: Außen-Eckprofil
- 82: vergrößerte Frachtpalette
- 83: Verbindungssteg
- 85: Container
- 86: Frachtpalette
- 87: Außenrahmen
- 88: Verrastungselemente
- 89: Verbindungsplatte
- 90: Schraube
- 91: Längskante Außenrahmen
- 92: Seitenkante Außenrahmen
- 93: Zapfen
- 94: Auflagefläche Rahmen
- 95: Außenkante Rahmen
- 96: oberer Rahmenkontaktbereich
- 97: unterer Rahmenkontaktbereich
- 98: Loch- oder Sitzschiene
- 99: Y-Riegel
- 100: Bodenauflagefläche
- b0, b1, b2, b3: Faserstreifenbreite
- dS: Dicke Schaumstoffschicht
- dFV: Dicke faserverstärkter Kunststoff
- F1, F2, F3: Faserausrichtung Faserlage
- VF1, VF2: Faserausrichtung Deckschichtlage
- ZP: Zurrpunkt
- M: Schaumstoffschichtmitte

## Patentansprüche

1. Bodenplatte (10) für eine Frachtpalette und/oder einen Frachtcontainer, umfassend
- mindestens einen Hybridkern (20) mit mindestens einer, vorzugsweise kunstharzdurchsetzten, Schaumstoffschicht (15), die zwischen einer ersten Kernschicht (21) aus faserverstärktem Kunststoff und einer zweiten Kernschicht (18) aus faserverstärktem Kunststoff eingelagert ist, wobei der Hybridkern (20) einen Randbereich (11) zur Herstellung einer, insbesondere flächigen, stoffschlüssigen Verbindung zwischen den Kernschichten (18, 21), umfasst,
und
- eine Auflageschicht (30) aus mindestens einer Metalllegierung, insbesondere aus einer Aluminiumlegierung,
wobei der Hybridkern (20) und die Auflageschicht (30), vorzugsweise durch Stoffschluss, miteinander verbunden sind, **dadurch gekennzeichnet, dass** die Dicke (dS) der Schaumstoffschicht (15) in einem Übergangsbereich (12) zu dem Randbereich (11) hin abnimmt, wobei der Übergangsbereich (12) und der Randbereich (11) Randfaserlagen (23), insbesondere mindestens zwei Randfaserlagen (23, 24) oder vier Randfaserlagen (23, 24, 25, 26), umfassen, die die erste Kernschicht (21) im Übergangsbereich (12) und/oder im Randbereich (11) zumindest abschnittsweise überdecken.

2. Bodenplatte (10) nach Anspruch 1,
**dadurch gekennzeichnet, dass**
die Dicke (dFV) eines faserverstärkten Kunststoffs (16) und/oder eine Lagenanzahl von Faserlagen in dem/einem Übergangsbereich (12) zu dem Randbereich (11) hin zunimmt.

3. Bodenplatte (10) nach einem der vorangegangenen Ansprüche,
**dadurch gekennzeichnet, dass**
die Randfaserlagen (23, 24, 25), insbesondere aus Kunststoff, im Übergangsbereich (12) zumindest abschnittsweise zwischen der ersten Kernschicht (21) und der Schaumstoffschicht (15) eingelagert und vorzugsweise aus Faserstreifen (23a, 23b, 23c, 23d) hergestellt sind.

4. Bodenplatte (10) nach einem der vorangegangenen Ansprüche,
**dadurch gekennzeichnet, dass**
Streifenbreiten (b0, b1, b2) der Randfaserlagen (23, 24, 25, 26) vorzugsweise zur Bodenplattenoberseite (54) hin abnehmen.

5. Bodenplatte (10) nach einem der vorhergehenden Ansprüche,
**dadurch gekennzeichnet, dass**
(die) Randfaserlagen (23, 24, 25, 26) zur Bildung eines vorzugsweise rechteckigen Rahmens angeordnet sind.

6. Bodenplatte (10) nach einem der vorhergehenden Ansprüche,
**dadurch gekennzeichnet, dass**
der Randbereich (11) als, vorzugsweise rechteckiger, Rahmen den Hybridkern (20) umgebend ausgebildet ist.

7. Bodenplatte (10) nach einem der vorangegangenen Ansprüche,
**dadurch gekennzeichnet, dass**
die zweite Kernschicht (18) mindestens zwei Faserlagen (22, 27), vorzugsweise drei Faserlagen (22, 27, 28), aus Kunststoff umfasst, welche unterschiedliche Faserausrichtungen aufweisen, wobei sich eine erste Faserausrichtung (F1) einer Faserlage (22) vorzugsweise um mindestens 20° oder um mindestens 30° oder um mindestens 40° oder um mindestens 45° und um maximal 90° von einer zweiten Faserausrichtung (F2) einer weiteren Faserlage (27) unterscheidet.

8. Bodenplatte (10) nach einem der vorangegangenen Ansprüche, **gekennzeichnet durch**
mindestens eine Deckschicht (40), die auf der zweiten Kernschicht (18) an der der Schaumschicht (15) abgewandten Seite angeordnet ist, wobei die Deckschicht (40) mindestens eine Deckschichtlage (41) aus Glasfaser und/oder Aramid umfasst.

9. Bodenplatte (10) nach Anspruch 8,
**dadurch gekennzeichnet, dass**
die Deckschicht (40) mindestens eine erste Deckschichtlage (41) und eine zweite Deckschichtlage (42) umfasst, wobei sich die erste Faserausrichtung (VF1) der ersten Deckschichtlage (41) vorzugsweise um mindestens 20° oder um mindestens 30° oder um mindestens 40° oder um mindestens 45° und um maximal 90° von einer zweiten Faserausrichtung (VF2) der zweiten Deckschichtlage (42) unterscheidet.

10. Bodenplatte (10) nach einem der vorangegangenen Ansprüche, **gekennzeichnet durch**
schräge Außenkanten (52), wobei die Außenkanten (52) in Relation zu einer Bodenauflagefläche (100) einen Winkel (α) von 30° - 60°, insbesondere von 35° - 55°, insbesondere von 40° - 50°, insbesondere von 45°, einschließen.

11. Bodenplatte (10) nach einem der vorangegangenen Ansprüche,
**dadurch gekennzeichnet, dass**
die Schaumstoffschicht (15) mehrere Schaumstofflagen (32, 32', 33, 33', 34, 34', 35, 35', 36, 36') umfasst.

12. Bodenplatte (10) nach Anspruch 11,
**dadurch gekennzeichnet, dass**
die Schaumstofflagen (32, 32', 33, 33', 34, 34', 35, 35', 36, 36') unterschiedliche Dicken aufweisen, wobei vorzugsweise die jeweiligen Dicken der Schaumstofflagen (32, 32', 33, 33', 34, 34', 35, 35', 36, 36') zur Schaumstoffschichtmitte (M) hin zunehmen.

13. Bodenplatte (10) nach einem der Ansprüche 11 bis 12,
**dadurch gekennzeichnet, dass**
mindestens eine Schaumstofflage der Schaumstoffschicht (15) nicht in den Randbereich (11) ragt.

14. Bodenplatte (10) nach einem der vorangegangenen Ansprüche,
**dadurch gekennzeichnet, dass**
mindestens eine Ecke (13) der rechteckförmigen Bodenplatte (10) mit einer Aussparung (14), insbesondere einer abgerundeten Aussparung, zur Verbindung mit einem Eckprofil (74) ausgebildet ist.

15. Bodenplatte (10) nach einem der vorangegangenen Ansprüche,
**gekennzeichnet durch**
mindestens einen Innenhohlprofil (48) das zumindest im Randbereich (11), vorzugsweise vollinnenumfänglich, ausgebildet ist.

16. Verfahren zur Herstellung einer Bodenplatte (10) nach einem der Ansprüche 1 bis 15, umfassend die Schritte:
- Anordnen einer Schaumstoffschicht (15) zwischen einer ersten faserverstärkten Kernschicht (21), vorzugsweise aus CFK, und einer zweiten faserverstärkten Kernschicht (18), vorzugsweise aus CFK, derart, dass die Kernschichten (18, 21) die Schaumstoffschicht (15) an den Seiten der Schaumstoffschicht (15) überragen und dass die Dicke (dS) der Schaumstoffschicht (15) in einem Übergangsbereich (12) zu einem Randbereich (11) hin abnimmt;
- Anordnen von Randfaserlagen (23, 24, 25, 26) im Übergangsbereich (12) und im Randbereich (11), wobei die Randfaserlagen die erste Kernschicht (21) im Übergangsbereich (12) und/oder im Randbereich (11) zumindest abschnittsweise überdecken;
- Aushärten eines aufgebrachten Kunstharzes zur Herstellung eines Hybridkerns (20) derart, dass ein Stoffschluss zwischen den Kernschichten (18, 21) und der Schaumstoffschicht (15), insbesondere in dem Randbereich (11), hergestellt wird;
- Herstellen einer Auflageschicht (30) aus einer Metalllegierung, insbesondere aus einer Aluminiumlegierung;
- Verbinden der Auflageschicht (30) mit dem Hybridkern (20) durch Stoffschluss, insbesondere durch Auftragen eines Klebstoffs, vorzugsweise eines Polyurethan-Klebstoffs, auf mindestens einer der zu verbindenden Flächen des Hybridkerns (20) und/oder der Auflageschicht (30).

17. Verfahren zur Herstellung einer Bodenplatte (10) nach Anspruch 16, **gekennzeichnet durch**
ein Herstellen der Schaumstoffschicht (15), wobei das Herstellen ein Einarbeiten bzw. Vorsehen von Aussparungen, insbesondere wabenförmige Aussparungen, umfasst.

18. Verfahrens zur Herstellung einer Bodenplatte (10) nach Anspruch 17,
**dadurch gekennzeichnet, dass**
das Herstellen der Schaumstoffschicht (15) das Verbinden mehrerer Schaumstofflagen (32, 32', 33, 33', 34, 34', 35, 35', 36, 36') mittels Stoffschluss, insbesondere durch Aufbringen und Aushärten eines Kunstharzes, umfasst.

19. Verfahren zur Herstellung einer Bodenplatte (10) nach Anspruch 18,
**gekennzeichnet durch**
das Einbringen von Lagen (39) aus faserverstärktem Kunststoff, insbesondere aus kohlenstofffaserverstärktem Kunststoff, zwischen einzelne Schaumstofflagen (32, 32', 33, 33', 34, 34', 35, 35', 36, 36') vor dem Aufbringen und Aushärten eines Kunstharzes.

20. Verfahren zur Herstellung einer Bodenplatte (10) nach einem der Ansprüche 16 bis 19,
**gekennzeichnet durch**
ein Anschrägen mindestens einer Kante (31) der Auflageschicht (30) vor der Verbindung mit dem Hybridkern (20) derart, dass die Kante (31) in Relation zu einer Bodenauflagefläche (100) einen Winkel (γ) von 30° - 60°, insbesondere von 35° - 55°, insbesondere von 40° - 50°, insbesondere von 45°, einschließt.

21. Verfahren zur Herstellung einer Bodenplatte (10) nach einem der
Ansprüche 16 bis 20,
**dadurch gekennzeichnet, dass**
der Hybridkern (10) beim Aushärten derart in einer Form gepresst wird, dass angeschrägte Außenkanten (52) mit einem Winkel (α) von 30° - 60°, insbesondere von 35° - 55°, insbesondere von 40° - 50°, insbesondere von 45°, entstehen.

22. Verfahren zur Herstellung einer Bodenplatte (10) nach einem der
Ansprüche 16 bis 21,
**dadurch gekennzeichnet, dass**
in mindestens eine Ecke (13) der rechteckförmigen Bodenplatte (10) eine Aussparung (14), insbesondere eine abgerundete Aussparung, eingebracht wird.

23. Verfahren zu Herstellung einer Bodenplatte (10) nach einem der Ansprüche 16 bis 22,
**dadurch gekennzeichnet, dass**
ein Innenhohlprofil (48) vor dem Aushärten des aufgebrachten Kunstharzes zur Herstellung des Hybridkerns (20) zwischen der ersten faserverstärkten Kernschicht (21) und der zweiten faserverstärkten Kernschicht (18) oder zwischen der ersten faserverstärkten Kernschicht (18) und der Auflageschicht (30) vorzugsweise vollinnenumfänglich, angeordnet wird.

24. Verfahren zur Herstellung eines Bodenelements,
**gekennzeichnet durch**
- ein Herstellen einer Bodenplatte (10) nach einem der Ansprüche 1 bis 15 und nach einem Verfahren nach einem der Ansprüche 16 bis 23;
- Verbinden, insbesondere Verschrauben, der Bodenplatte (10) mit einem Rahmen (70, 70', 87), umfassend mindestens vier Hohlprofile (61) und mindestens vier Außen-Eckprofile (81).

## Claims

1. Bottom plate (10) for a freight pallet and/or a freight container, comprising
- at least one hybrid core (20) having at least one foam layer (15) which is preferably permeated by synthetic resin and which is embedded between a first core layer (21) of fiber-reinforced plastic material and a second core layer (18) of fiber-reinforced plastic material, wherein the hybrid core (20) comprises a border area (11) for creating an in particular planar material-bonded connection between the core layers (18, 21),
and
- a coating layer (30) of at least one metal alloy, in particular of an aluminum alloy,
wherein the hybrid core (20) and the coating layer (30) are connected to one another preferably by a material bond,
**characterized in that**
the thickness (dS) of the foam layer (15) decreases in a transition area (12) toward the border area (11), wherein the transition area (12) and the border area (11) comprise edge fiber layers (23), in particular at least two edge fiber layers (23, 24) or four edge fiber layers (23, 24, 25, 26) which cover the first core layer (21) in the transition area (12) and/or in the border area (11) at least in sections.

2. Bottom plate (10) according to claim 1,
**characterized in that**
the thickness (dFV) of a fiber-reinforced plastic material (16) and/or a number of layers of fiber layers increases in the/a transition area (12) toward the edge area (11).

3. Bottom plate (10) according to anyone of the preceding claims,
**characterized in that**
the edge fiber layers (23, 24, 25), in particular of plastic material, are embedded in the transition area (12) at least in sections between the first core layer (21) and the foam layer (15) and are preferably made from strips of fibers (23a, 23b, 23c, 23d).

4. Bottom plate (10) according to anyone of the preceding claims,
**characterized in that**
strip widths (b0, b1, b2) of the edge fiber layers (23, 24, 25, 26) preferably decrease toward the bottom plate top side (54).

5. Bottom plate (10) according to anyone of the preceding claims,
**characterized in that**
(the) edge fiber layers (23, 24, 25, 26) are arranged for forming a preferably rectangular frame.

6. Bottom plate (10) according to anyone of the preceding claims,
**characterized in that**
the edge area (11) is realized as a preferably rectangular frame surrounding the hybrid core (20).

7. Bottom plate (10) according to anyone of the preceding claims,
**characterized in that**
the second core layer (18) comprises at least two fiber layers (22, 27), preferably three fiber layers (22, 27, 28) of plastic material, which have different fiber orientations, wherein a first fiber orientation (F1) of one fiber layer (22) preferably differs by at least 20° or by at least 30° or by at least 40° or by at least 45° and by a maximum of 90° from a second fiber orientation (F2) of a further fiber layer (27).

8. Bottom plate (10) according to anyone of the preceding claims,
**characterized by**
at least one cover layer (40) being arranged on the second core layer (18) at the side facing away from the foam layer (15), wherein the cover layer (40) comprises at least one cover layer sheet (41) of glass fiber and/or aramid.

9. Bottom plate (10) according to claim 8,
**characterized in that**
the cover layer (40) comprises at least one first cover layer sheet (41) and a second cover layer sheet (42), wherein the first fiber orientation (VF1) of the first cover layer sheet (41) preferably differs by at least 20° or by at least 30° or by at least 40° or by at least 45° and by a maximum of 90° from a second fiber orientation (VF2) of the second cover layer sheet (42).

10. Bottom plate (10) according to anyone of the preceding claims,
**characterized by**
beveled outer edges (52), wherein the outer edges (52) enclose, in relation to a bottom support surface (100), an angle (α) of 30° to 60°, in particular of 35° to 55°, in particular of 40° to 50°, in particular of 45°.

11. Bottom plate (10) according to anyone of the preceding claims,
**characterized in that**
the foam layer (15) comprises a plurality of foam sheets (32, 32', 33, 33', 34, 34', 35, 35', 36, 36').

12. Bottom plate (10) according to claim 11,
**characterized in that**
the foam sheets (32, 32', 33, 33', 34, 34', 35, 35', 36, 36') have different thicknesses, wherein the respective thicknesses of the foam sheets (32, 32', 33, 33', 34, 34', 35, 35', 36, 36') preferably increase toward the center (M) of the foam layer.

13. Bottom plate (10) according to anyone of claims 11 to 12,
**characterized in that**
at least one foam sheet of the foam layer (15) does not protrude into the edge area (11).

14. Bottom plate (10) according to anyone of the preceding claims,
**characterized in that**
at least one corner (13) of the rectangular bottom plate (10) is realized to have a recess (14), in particular a rounded recess, for connecting to a corner profile (74).

15. Bottom plate (10) according to anyone of the preceding claims,
**characterized by**
at least one inner hollow profile (48) realized at least in the edge area (11) preferably over the entire inner circumference.

16. Method for producing a bottom plate (10) according to anyone of claims 1 to 15, comprising the steps of:
- arranging a foam layer (15) between a first fiber-reinforced core layer (21), preferably of CFRP, and a second fiber-reinforced core layer (18), preferably of CFRP, such that the core layers (18, 21) protrude beyond the foam layer (15) at the sides of the foam layer (15), and that the thickness (dS) of the foam layer (15) decreases in a transition area (12) toward a border area (11);
- arranging edge fiber layers (23, 24, 25, 26) in the transition area (12) and in the border area (11), wherein the edge fiber layers cover the first core layer (21) in the transition area (12) and/or in the edge area (11) at least in sections;
- curing an applied synthetic resin for producing a hybrid core (20) such that a material bond is produced between the core layers (18, 21) and the foam layer (15) in particular in the edge area (11);
- producing a coating layer (30) from a metal alloy, in particular from an aluminum alloy;
- connecting the coating layer (30) to the hybrid core (20) by a material bond, in particular by applying an adhesive preferably a polyurethane adhesive, to at least one of the surfaces, to be connected of the hybrid core (20) and/or of the coating layer (30).

17. Method for producing a bottom plate (10) according to claim 16,
**characterized by**
producing the foam layer (15), wherein the producing includes to incorporate or provide recesses, in particular honeycombed recesses.

18. Method for producing a bottom plate (10) according to claim 17,
**characterized in that**
the producing of the foam layer (15) includes connecting a plurality of foam sheets (32, 32', 33, 33', 34, 34', 35, 35', 36, 36') by means of a material bond, in particular by applying and curing a synthetic resin.

19. Method for producing a bottom plate (10) according to claim 18,
**characterized by**
the incorporation of sheets (39) of fiber-reinforced plastic material, in particular of carbon fiber-reinforced plastic material, between individual foam sheets (32, 32', 33, 33', 34, 34', 35, 35', 36, 36') prior to applying and curing a synthetic resin.

20. Method for producing a bottom plate (10) according to anyone of claims 16 to 19,
**characterized by**
beveling at least one edge (31) of the coating layer (30) prior to connecting to the hybrid core (20) such that the edge (31) encloses, in relation to a bottom support surface (100), an angle (γ) of 30° to 60°, in particular of 35° to 55°, in particular of 40° to 50°, in particular of 45°.

21. Method for producing a bottom plate (10) according to anyone of claims 16 to 20,
**characterized in that**
the hybrid core (20) during the curing is pressed in a form such that beveled outer edges (52) having an angle (α) of 30° to 60°, in particular of 35° to 55°, in particular of 40° to 50°, in particular of 45° are formed.

22. Method for producing a bottom plate (10) according to anyone of claims 16 to 21,
**characterized in that**
a recess (14), in particular a rounded recess, is incorporated in at least one corner (13) of the rectangular bottom plate (10).

23. Method for producing a bottom plate (10) according to anyone of claims 16 to 22,
**characterized in that**
an inner hollow profile (48) is arranged preferably over the entire inner circumference between the first fiber-reinforced core layer (21) and the second fiber-reinforced core layer (18) or between the first fiber-reinforced core layer (18) and the coating layer (30) prior to curing the applied synthetic resin for producing the hybrid core (20).

24. Method for producing a bottom element,
**characterized by**
- producing a bottom plate (10) according to anyone of claims 1 to 15 and according to a method according to anyone of claims 16 to 23;
- connecting, in particular screwing, the bottom plate (10) to a frame (70, 70', 87) comprising at least four hollow profiles (61) and at least four outer corner profiles (81).

## Revendications

1. Plaque de fond (10) pour une palette de fret et/ou un conteneur de fret, comportant
- au moins un coeur hybride (20) pourvu d'au moins une couche en mousse (15) de préférence imprégnée de résine synthétique intercalée entre une première couche de coeur (21) en matière synthétique renforcée de fibres et une seconde couche de coeur (18) en matière synthétique renforcée de fibres, le coeur hybride (20) comprenant une zone de bord (11) pour établir une liaison en particulier surfacique par coopération de matières entre les couches de coeur (18, 21),
et
- une couche d'appui (30) en au moins un alliage métallique, en particulier en un alliage d'aluminium,
dans laquelle
le coeur hybride (20) et la couche d'appui (30) sont reliés entre eux de préférence par coopération de matières,
**caractérisée en ce que**
l'épaisseur (dS) de la couche en mousse (15) diminue dans une zone de transition (12) vers la zone de bord (11), la zone de transition (12) et la zone de bord (11) comprenant des nappes de fibres de bord (23), en particulier au moins deux nappes de fibres de bord (23, 24) ou quatre nappes de fibres de bord (23, 24, 25, 26) qui recouvrent au moins localement la première couche de coeur (21) dans la zone de transition (12) et/ou dans la zone de bord (11).

2. Plaque de fond (10) selon la revendication 1,
**caractérisée en ce que**
l'épaisseur (dFV) d'une matière synthétique (16) renforcée de fibres et/ou un nombre de nappes de fibres augmente dans la/une zone de transition (12) vers la zone de bord (11).

3. Plaque de fond (10) selon l'une des revendications précédentes,
**caractérisée en ce que**
dans la zone de transition (12), les nappes de fibres de bord (23, 24, 25), en particulier en matière synthétique, sont intercalées au moins localement entre la première couche de coeur (21) et la couche en mousse (15) et sont réalisées de préférence en bandes de fibres (23a, 23b, 23c, 23d).

4. Plaque de fond (10) selon l'une des revendications précédentes,
**caractérisée en ce que**
les largeurs des bandes (b0, b1, b2) des nappes de fibres de bord (23, 24, 25, 26) diminuent de préférence vers la face supérieure (54) de la plaque de fond.

5. Plaque de fond (10) selon l'une des revendications précédentes,
**caractérisée en ce que**
(les) des nappes de fibres de bord (23, 24, 25, 26) sont agencées pour former un cadre de préférence rectangulaire.

6. Plaque de fond (10) selon l'une des revendications précédentes,
**caractérisée en ce que**
la zone de bord (11) est réalisée sous la forme d'un cadre de préférence rectangulaire entourant le coeur hybride (20).

7. Plaque de fond (10) selon l'une des revendications précédentes,
**caractérisée en ce que**
la seconde couche de coeur (18) comprend au moins deux nappes de fibres (22, 27), de préférence trois nappes de fibres (22, 27, 28) en matière synthétique qui présentent différentes orientations de fibres, une première orientation de fibres (F1) d'une nappe de fibres (22) se distinguant de préférence d'au moins 20° ou d'au moins 30° ou d'au moins 40° ou d'au moins 45° et au maximum de 90° de la seconde orientation de fibres (F2) d'une autre nappe de fibres (27).

8. Plaque de fond (10) selon l'une des revendications précédentes,
**caractérisée par**
au moins une couche de couverture (40) qui est agencée sur la seconde couche de coeur (18) sur le côté détourné de la couche en mousse (15), la couche de couverture (40) comprenant au moins une nappe de couche de couverture (41) en fibres de verre et/ou en aramide.

9. Plaque de fond (10) selon la revendication 8,
**caractérisée en ce que**
la couche de couverture (40) comprend au moins une première nappe de couche de couverture (41) et une seconde nappe de couche de couverture (42), la première orientation de fibres (VF1) de la première nappe de couche de couverture (41) se distinguant de préférence d'au moins 20° ou d'au moins 30° ou d'au moins 40° ou d'au moins 45° et au maximum de 90° de la seconde orientation de fibres (VF2) de la seconde nappe de couche de fibres (42).

10. Plaque de fond (10) selon l'une des revendications précédentes,
**caractérisée par**
des arêtes extérieures obliques (52), les arêtes extérieures (52) définissant un angle (α) de 30° - 60°, en particulier de 35° - 55°, en particulier de 40° - 50°, en particulier de 45°, par rapport à une surface d'appui de fond (100).

11. Plaque de fond (10) selon l'une des revendications précédentes,
**caractérisée en ce que**
la couche en mousse (15) comprend plusieurs nappes en mousse (32, 32', 33, 33', 34, 34', 35, 35', 36, 36').

12. Plaque de fond (10) selon la revendication 11,
**caractérisée en ce que**
les nappes en mousse (32, 32', 33, 33', 34, 34', 35, 35', 36, 36') présentent différentes épaisseurs, et de préférence les épaisseurs respectives des nappes en mousse (32, 32', 33, 33', 34, 34', 35, 35', 36, 36') augmentent vers le centre (M) de la couche en mousse.

13. Plaque de fond (10) selon l'une des revendications 11 à 12,
**caractérisée en ce que**
au moins une nappe en mousse de la couche en mousse (15) ne pénètre pas dans la zone de bord (11).

14. Plaque de fond (10) selon l'une des revendications précédentes,
**caractérisée en ce que**
au moins un coin (13) de la plaque de fond (10) rectangulaire est réalisé avec une échancrure (14), en particulier une échancrure arrondie, pour la liaison avec un profilé de coin (74).

15. Plaque de fond (10) selon l'une des revendications précédentes,
**caractérisée par**
au moins un profilé creux intérieur (48) qui est réalisé au moins dans la zone de bord (11), de préférence sur toute la périphérie intérieure.

16. Procédé pour réaliser une plaque de fond (10) selon l'une des revendications 1 à 15, comprenant les étapes consistant à :
- agencer une couche en mousse (15) entre une première couche de coeur (21) renforcée de fibres, de préférence en matière synthétique renforcée de fibres, et une seconde couche de coeur (18) renforcée de fibres, de préférence en matière synthétique renforcée de fibres, de telle sorte que les couches de coeur (18, 21) dépassent au-delà de la couche en mousse (15) sur les côtés de la couche en mousse (15), et en ce que l'épaisseur (dS) de la couche en mousse (15) diminue dans une zone de transition (12) vers une zone de bord (11);
- agencer des nappes de fibres de bord (23, 24, 25, 26) dans la zone de transition (12) et dans la zone de bord (11), les nappes de fibres de bord recouvrant au moins localement la première couche de coeur (21) dans la zone de transition (12) et/ou dans la zone de bord (11);
- faire durcir une résine synthétique déposée pour réaliser un coeur hybride (20) de manière à établir une coopération de matières entre les couches de coeur (18, 21) et la couche en mousse (15), en particulier dans la zone de bord (11);
- réaliser une couche d'appui (30) en un alliage métallique, en particulier en un alliage d'aluminium ;
- relier la couche d'appui (30) au coeur hybride (20) par coopération de matières, en particulier par application d'une colle, de préférence d'une colle de polyuréthanne, sur l'une au moins des surfaces à relier du coeur hybride (20) et/ou de la couche d'appui (30).

17. Procédé pour réaliser une plaque de fond (10) selon la revendication 16,
**caractérisé par**
une réalisation de la couche en mousse (15), la réalisation comprenant un usinage ou un aménagement d'échancrures, en particulier d'échancrures en forme de nids d'abeilles.

18. Procédé pour réaliser une plaque de fond (10) selon la revendication 17,
**caractérisé en ce que**
la réalisation de la couche en mousse (15) comprend la liaison de plusieurs nappes en mouse (32, 32', 33, 33', 34, 34', 35, 35', 36, 36') par coopération de matières, en particulier par application et durcissement d'une résine synthétique.

19. Procédé pour réaliser une plaque de fond (10) selon la revendication 18,
**caractérisé par**
l'intégration de nappes (39) en matière synthétique renforcée de fibres, en particulier en matière synthétique renforcée de fibres de carbone, entre des nappes de mousse individuelles (32, 32', 33, 33', 34, 34', 35, 35', 36, 36') avant l'application et le durcissement d'une résine synthétique.

20. Procédé pour réaliser une plaque de fond (10) selon l'une des revendications 16 à 19,
**caractérisé par**
un chanfreinage d'au moins une arête (31) de la couche d'appui (30) avant la liaison avec le coeur hybride (20), de telle sorte que l'arête (31) définit un angle (γ) de 30° - 60°, en particulier de 35° - 55°, en particulier de 40° - 50°, en particulier de 45°, par rapport à une surface d'appui de fond (100).

21. Procédé pour réaliser une plaque de fond (10) selon l'une des revendications 16 à 20,
**caractérisé en ce que**
lors du durcissement le coeur hybride (10) est pressé dans un moule de telle sorte qu'il résulte des arêtes extérieures (52) chanfreinées d'un angle (α) de 30° - 60°, en particulier de 35° - 55°, en particulier de 40° - 50°, en particulier de 45°.

22. Procédé pour réaliser une plaque de fond (10) selon l'une des revendications 16 à 21,
**caractérisé en ce que**
une échancrure (14), en particulier une échancrure arrondie, est ménagée dans au moins un coin (13) de la plaque de fond rectangulaire (10).

23. Procédé pour réaliser une plaque de fond (10) selon l'une des revendications 16 à 22,
**caractérisé en ce que**
avant le durcissement de la résine synthétique appliquée, un profilé creux intérieur (48) est agencé entre la première couche de coeur (21) renforcée de fibres et la seconde couche de coeur (18) renforcée de fibres ou entre la première couche de coeur (18) renforcée de fibres et la couche d'appui (30), de préférence sur toute la périphérie intérieure, afin de réaliser le coeur hybride (20).

24. Procédé pour réaliser un élément de fond,
**caractérisé par**
- une réalisation d'une plaque de fond (10) selon l'une des revendications 1 à 15 par un procédé selon l'une des revendications 16 à 23 ;
- une liaison, en particulier un vissage de la plaque de fond (10) avec un cadre (70, 70', 87), comportant au moins quatre profilés creux (61) et au moins quatre profilés de coin extérieurs (81).
